# EUROPÄISCHE PATENTSCHRIFT

(11) **EP 0 870 314 B1**
(45) Veröffentlichungstag und Bekanntmachung des Hinweises auf die Patenterteilung: **01.12.1999**
(21) Anmeldenummer: 96946158.1
(22) Anmeldetag: 17.12.1996
(51) Int. Cl.: H01H 19/00, H01H 36/00

(54) **SCHALTVORRICHTUNG UND VERFAHREN ZUM STEUERN EINES FREMDKRAFTBETÄTIGTEN VERSTELLANTRIEBES EINES KRAFTFAHRZEUGS**
SWITCHING DEVICE AND PROCESS FOR EXTERNAL FORCE-ACTUATED DRIVING DEVICES IN A MOTOR VEHICLE
DISPOSITIF ET SYSTEME DE COMMUTATION POUR LA COMMANDE D'UN ELEMENT D'ENTRAINEMENT ACTIONNE PAR UNE FORCE EXTERIEURE POUR VEHICULE AUTOMOBILE

(30) Priorität: 18.12.1995 DE 19548659
(43) Veröffentlichungstag der Anmeldung: 14.10.1998
(73) Patentinhaber: Brose Fahrzeugteile GmbH & Co. KG, 96450 Coburg (DE)
(72) Erfinder: KALB, Roland, D-96269 Grossheirath (DE); BITTNER, Günter, D-96489 Niederfüllbach (DE)
(74) Vertreter: Müller, Wolfram Hubertus, Dipl.-Phys.
(86) Internationale Anmeldenummer: DE9602469
(87) Internationale Veröffentlichungsnummer: WO9722984

(56) Entgegenhaltungen:
- EP-A- 0 102 332
- EP-A- 0 113 603
- EP-A- 0 257 139
- EP-A- 0 323 291
- EP-A- 0 400 313
- DE-A- 2 757 593
- DE-A- 3 039 346
- DE-A- 3 532 574
- DE-A- 3 736 400
- DE-A- 4 404 594
- DE-U- 8 130 371
- FR-A- 2 484 168
- US-A- 3 514 670
- US-A- 3 621 162
- US-A- 4 253 004
- US-A- 4 377 004
- US-A- 5 423 227

## Beschreibung

Die Erfindung betrifft zwei Schaltvorrichtungen und ein Verfahren zum Steuern eines fremdkraftbetätigten Verstellantriebs eines Kraftfahrzeugs nach dem Oberbegriff des Anspruchs 1, des Anspruchs 16 bzw. des Anspruchs 28.

Es sind im Stand der Technik Schaltvorrichtungen wie Tastschalter, Wippschalter, Druckschalter oder Zugschalter bekannt, die definierte Ein- und Ausschaltzustände aufweisen. Ein durch einen derartigen Schalter zu schaltender elektrischer Verstellantrieb kennt dementsprechend ebenfalls lediglich zwei Schaltzustände: den angeschalteten Zustand und den ausgeschalteten Zustand.

Eine Ausnahme hiervon bilden Drehschalter und Schiebeschalter mit integriertem Potentiometer. Bei definierten Endlagen des Potentiometers bzw. des Drehschalters, die den Endpositionen eines zu verstellenden Objektes entsprechen, ist zwischen den Endlagen ein üblicherweise linearer Bereich ausgebildet, in dem ein durch die Position des Drehschalters eindeutig bestimmtes Signal vom Drehschalter abgegeben wird. Dabei werden den Potentiometerwerten absolute Positionen des zu verstellenden Objektes zugeordnet. Dadurch ist es möglich, beispielsweise bei einer Verstellung einer Fensterscheibe mittels eines elektrischen Fensterheberantriebs Zwischenpositionen der Fensterscheibe einzustellen und vorzuwählen.

Bekannte Drehschalter mit integriertem Potentiometer erlauben jedoch nicht, aus jeder beliebigen Schalterposition heraus Einfluß auf den Ablauf, insbesondere auf dynamische Kenngrößen der Verstellung eines zu verstellenden Objektes zu nehmen. Insbesondere ist es nicht möglich, die Verstellgeschwindigkeit und die Feinstufigkeit einer Verstellung zu beeinflussen. Auch erhöhte die Möglichkeit einer Einflußnahme auf die Verstellgeschwindigkeit einer Verstellung den allgemeinen Bedienungskomfort erheblich.

Eine Schaltvorrichtung gemäß dem Oberbegriff des Anspruch 1 ist aus der EP-A-0 323 291 bekannt. Diese betrifft einen Sollwertgeber für die Positionssteuerung eines Gegenstandes mit einem endlos drehbaren Steuerknopf, die bei einer Drehung des Steuerknopfes Impulse erzeugt, deren Anzahl proportional zum Drehwinkel des Knopfes ist. Aus der Anzahl der empfangenen Impulse, der Stellung des zu steuernden Gegenstandes und der Bewegungsrichtung wird ein Sollwert betreffend die Stellung des zu steuernden Gegenstandes ermittelt. Die Anzahl der empfangenen Impulse wird dabei aus dem Verhältnis zwischen dem Drehwinkel einer vorgenommen Verstellung und dem für eine Bedienperson zugänglichen maximalen Winkel errechnet, so daß die erzeugten Impulse den Weg kodieren, den der zu steuernde Gegenstand ausgehend von der Ausgangsstellung durchlaufen soll.

Die FR-A-2 484 168 beschreibt eine elektrische Schaltvorrichtung für eine Fensterhebervorrichtung mit einem Betätigungselement, das in zwei Richtungen verschwenkbar ist und je nach Verschwenkrichtung ein Schließen oder ein Öffnen einer Fensterscheibe bewirkt. Dabei ist vorgesehen, daß bei einer kurzen Betätigung des Betätigungselementes die Fensterscheibe mit einer hohen Geschwindigkeit verstellt wird. Bei einer langen Betätigung des Betätigungselementes wird die Fensterscheibe mit einer langsameren Geschwindigkeit verstellt. Hierzu sind entsprechende Stromkreise vorgesehen.

Die DE 44 04 594 A1 offenbart eine Bedieneinrichtung zum Lenken, Beschleunigen oder Abbremsen eines Kraftfahrzeuges mit einem Betätigungselement, das eine definierte Nullage aufweist und ausgehend von der Nullage in zwei Auslenkrichtungen verstellbar ist. In Abhängigkeit vom Grad der Auslenkung des Betätigungselements aus seiner Ruhelage oder in Abhängigkeit von der Zeitdauer der Auslenkung des Bedienelementes erfolgt eine Einstellung der Lenkung, des Motors oder der Bremsanlage des Kraftfahrzeugs.

Aus der DE 35 32 574 A1 ist ein elektrischer Schalter für einen Antriebsmotor mit einem Betätigungsschieber bekannt. Der Betätigungsschieber steht mit einem Schiebewiderstand sowie einer zugehörigen Steuerelektronik derart in Wirkverbindung, daß der Schiebeweg des Betätigungsschiebers unmittelbar proportional dem Verstellweg eines Schiebedaches, Fensters oder dergleichen ist.

Die DE 37 36 400 A1 offenbart eine Sicherheitsvorrichtung für bewegliche Teile, insbesondere für Fensterheber und Schiebedächer von Kraftfahrzeugen. Ein bewegliches Teil, etwa eine Fensterscheibe, wird mittels eines Antriebsmotors über einen gefährdeten Klemmbereich, in dem Fremdkörper zwischen das bewegliche Teil und ein ruhendes Teil einklemmbar sind, in eine Schließstellung bewegt. Dabei wird die Verstellgeschwindigkeit beim Schließen des beweglichen Teils im gefährdenden Klemmbereich verringert.

Der Erfindung liegt die Aufgabe zugrunde, Schaltvorrichtungen und ein Verfahren zum Steuern eines fremdkraftbetätigten Verstellantriebes an einem Kraftfahrzeug zur Verfügung zu stellen, die es einer Bedienperson ermöglichen, nicht nur die Endwerte einer Verstellung zu bestimmen, sondern auch einen größtmöglichen Einfluß auf den Ablauf der Verstellung des zu verstellenden Objektes, insbesondere einen Einfluß auf die Verstellgeschwindigkeit zu nehmen.

Diese Aufgabe wird erfindungsgemäß durch eine Schaltvorrichtung mit den Merkmalen des Anspruchs 1, alternativ durch eine Schaltvorrichtung mit den Merkmalen des Anspruchs 16 sowie durch ein Verfahren mit den Merkmalen des Anspruchs 26 gelöst.

Die erfindungsgemäßen Lösungen sehen vor, in Abhängigkeit von der Frequenz einer Steuersignal-Impulsfolge, die bei einer Drehung des Betätigungselements durch zugeordnete Signalerzeugungsmittel erzeugt werden, die Verstellgeschwindigkeit des Verstellantriebs bzw. eines zu verstellenden Objektes einzustellen. Die Frequenz bzw. die Periodendauer der Steuersignal-Impulsfolge und damit die Dynamik einer Verstellung wird dabei durch den Nutzer durch eine entsprechende Betätigung des Betätigungselementes vorgegeben. Dadurch wird ein größtmöglicher individueller Einfluß auf den Ablauf der Verstellung eines zu verstellenden Objektes ermöglicht. Insbesondere wird ermöglicht, Einfluß auf die Verstellgeschwindigkeit und damit auf die Positioniergenauigkeit zu nehmen.

Die Frequenz der Steuersignal-Impulsfolge ist bei einem drehbaren Betätigungselement dabei abhängig von der Geschwindigkeit der Drehung des Betätigungselementes und bei einem Betätigungselement mit definierter Nullage abhängig von der Dynamik der Verstellung des Betätigungselementes aus seiner Ruhelage heraus. Unter der Dynamik einer Verstellung des Betätigungselementes wird die Geschwindigkeit oder Beschleunigung der Verstellung verstanden.

Es liegt ebenfalls im Rahmen der Erfindung, daß bei Verwendung eines Betätigungselement mit definierter Nullage in Abhängigkeit vom der Dynamik der Verstellung des Betätigungselementes ein Widerstandswert und/oder ein Spannungswert und/oder ein Stromwert gebildet wird. Ein widerstandsabhängiger Wert ist zum Beispiel über Dehnmeßstreifen und ein spannungsabhängiger Wert mittels eines Piezoelementes erzeugbar. Der jeweilige Wert wird der Steuereinheit zugeführt und stellt ein Steuersignal dar, auf dessen Grundlage die Verstellgeschwindigkeit bestimmt wird. Bei einer Änderung der Dynamik der Verstellung des Betätigungselelementes ändert sich der Widerstandswert bzw. Spannungs- oder Stromwert entsprechend.

Die Erfindung ermöglicht, über die Dynamik einer Verstellung des Betätigungselementes die Dynamik der Verstellung des Verstellantriebs individuell zu bestimmen. Beispielsweise führt eine schnelle Drehung eines drehbaren Betätigungselements, etwa eines drehbaren Rads, zu einer hohen Frequenz der Steuersignal-Impulsfolge und damit zu einer entsprechend großen Verstellgeschwindigkeit des Verstellantriebs bzw. des zu verstellenden Objektes, etwa einer Fensterscheibe. Die genaue Abhängigkeit zwischen der Frequenz der Steuersignal-Impulsfolge und der Verstellgeschwindigkeit des Verstellantriebs kann dabei in geeigneter Weise festgelegt werden. Beispielsweise erfolgt eine proportionale Abhängigkeit, d.h. die Verstellgeschwindigkeit des Verstellantriebs ist proportional zur vom Nutzer vorgegebenen Geschwindigkeit der Verstellung des Betätigungselements. In einem anderen Beispiel erfolgt eine diskrete Zuordnung, d.h. bestimmten Geschwindigkeitsbereichen der Verstellung des Betätigungselements und damit bestimmten Frequenzbereichen der Steuersignal-Impulsfolge werden bestimmte Verstellgeschwindigkeiten des Verstellantriebs zugeordnet.

Die elektronische Steuereinheit bestimmt aufgrund der Eigenschaften der Steuersignal-Impulsfolge die Verstellgeschwindigkeit sowie den Verstellweg, die Position und die Verstelldauer der Verstellung eines zu verstellenden Objektes und/oder mittels einer geeigneten Drehrichtungserkennung die Richtung einer Verstellung, z.B. unter Verwendung von Hallsensoren. Insbesondere codiert die Frequenz der Impulsfolge die Geschwindigkeit und die Anzahl der Impulse innerhalb eines bestimmten Zeitintervalls den genauen Verstellweg einer Verstellung des zu verstellenden Objektes.

Die Erfindung ermöglicht somit die Generierung von Steuersignalen, die den genauen Verstellablauf codieren und nicht lediglich die Information "AN" und "AUS" bzw. "AUF" und "AB".

Die Information der Steuersignale wird in einer elektronischen Steuereinheit in Steuerbefehle für den Antriebsmotor des Verstellantriebs umgesetzt. Hierbei wird dem Antriebsmotor in Abhängigkeit von den Steuersignalen ein geregelter Motorstrom zugeführt, so daß die Antriebswelle des Antriebsmotors mit einer bestimmten Geschwindigkeit in der gewünschten Drehrichtung betrieben wird. Über ein Getriebe wird die Rotationsbewegung der Motorwelle in eine translatorische Bewegung des zu verstellenden Objektes umgewandelt. Entsprechend der Dynamik der Verstellung des Betätigungselementes erfolgt eine schnelle oder langsame Verstellung des zu verstellenden Objektes.

In einer bevorzugten Ausgestaltung der Erfindung sind am Betätigungselement bzw. an einem mechanisch mit dem Betätigungselement verbundenen Teil signalerzeugende oder signalverändernde Elemente angeordnet. Diese wirken zur Signalerzeugung mit korrespondierenden Sensorelementen wie Hallsensoren, Leuchtdioden oder elektrischen Schleifkontakten zusammen, die in Abhängigkeit von der Verstellung des Betätigungselementes Steuersignale für die elektronische Steuereinheit erzeugen.

Dabei wird eine Impulsfolge erzeugt, deren Eigenschaften ein Maß für die die Verstellgeschwindigkeit, den Verstellweg, die Position und die Verstelldauer eines zu verstellenden Objektes darstellen. Die Verstelldauer wird durch den Benutzer über die Dauer einer Betätigung des Betätigungselementes vorgegeben. Die zu erreichende Position des Verstellobjektes ergibt sich aus der Ausgangsposition und dem Verstellweg.

Bei Verwendung eines signalgebenden Elementes wird zur Erzeugung am Sensorelement bei Bewegung des signalgebenden Elementes ein Signal erzeugt und bei Verwendung eines signalverändernden Elementes am Sensorelement bei einer Bewegung des signalverändernden Elementes ein vorhandenes Grundsignal verändert.

In einer vorteilhaften Weiterbildung der Erfindung generiert die elektronische Steuereinheit Steuerbefehle für den Antriebsmotor nicht allein in Abhängigkeit von den Steuersignalen der Schaltvorrichtung, sondern auch in Abhängigkeit von der Position des zu verstellenden Objektes sowie von weiteren Steuersignalen, die sich aus einer direkten oder indirekten Überwachung eines Verstellvorgangs des Verstellobjektes ergeben und beispielsweise durch externe Kräfte bewirkte Geschwindigkeitsänderungen des Verstellobjektes betreffen. Durch Berücksichtigung auch der Position des zu verstellenden Objektes sowie weiterer Überwachungssignale ist es möglich, Besonderheiten bei einer Verstellung zu berücksichtigen.

In einem bevorzugten Ausführungsbeispiel ist das Betätigungselement als endlos drehbares Rad ohne absolute Nullage und ohne definierte Ein- und Ausschaltzustände bezogen auf eine bestimmte Drehlage des Rades ausgebildet. Die signalerzeugenden bzw. signalverändernden Elemente sind an einem Rad oder an einer Scheibe ausgebildet, das bzw. die drehfest mit dem Betätigungselement verbunden ist. Als signalerzeugende bzw. signalverändernde Elemente dienen bevorzugt magnetisierte Bereiche des Rades bzw. der Scheibe, alternativ Loch- oder Schlitzblenden oder mit einer Spannung beaufschlagte Leiterbahnen, die zur Signalerzeugung mit mindestens einem Hallsensor, einer Lichtschranke bzw. mit elektrischen Schleifkontakten in Wechselwirkung stehen. Zur Ansteuerung bzw. Erkennung von mehr als einer Bewegungsrichtung ist ein weiterer Sensorkanal einzusetzen.

Der Einsatz eines endlos drehbaren Rades als Betätigungselement ermöglicht eine positionsbezogene oder dynamisch beeinfußbare Verstellung des Betätigungselementes. Bei einer vorzunehmenden Verstellung wird das Rad ausgehend von der momentanen Ruhelage mit einer gewissen Geschwindigkeit in die gewünschte Richtung gedreht. Dies führt zu einer Verstellung des zu verstellenden Objektes entsprechend der gewählten Drehrichtung und der vorgenommenen Drehung des Rads. Auf diese Weise ist das zu verstellende Objekt nach Belieben schnell oder langsam verstellbar. Wenn keine Signale erzeugt werden, wird dadurch eine Ruheposition bzw. AUS-Stellung festgelegt.

In einer Weiterbildung der Erfindung folgt die Verstellung des zu verstellenden Objektes nicht direkt den Geschwindigkeitswerten oder dem Maß der Verstellung des Betätigungselementes, sondern vielmehr einer Funktion dieser Geschwingkeitswerte, denen eine bestimmten Impulsfrequenz der Steuersignal-Impulsfolge entspricht. Insbesondere erfolgt eine Zuordnung derart, daß unter einem ersten Wert liegenden Impulsfrequenzen der Steuersignal-Impulsfolge eine von der Impulsfrequenz abhängige und entsprechend variable Geschwindigkeit zugeordnet wird, die mindestens gleich einer vorgegebenen Mindestverstellgeschwindigkeit ist.

Zwischen diesem ersten Wert und einem zweiten Wert liegenden Impulsfrequenzen wird durch die elektronische Steuereinheit eine konstante mittlere Verstellgeschwindigkeit und über dem zweiten Wert liegenden Impulsfrequenzen eine maximale Verstellgeschwindigkeit zugeordnet wird. Somit wird das Überschreiten einer bestimmten Drehgeschwindigkeit des Rads und eine entsprechend hohe Impulsfrequenz der Steuersignal-Impulsfolge durch die elektronische Steuereinheit dahingehend interpretiert, das zu verstellende Objekt mit der maximalen Verstellgeschwindigkeit in eine Endlage zu fahren.

In einer vorteilhaften Weiterbildung ist das als endlos drehbares Rad ausgeführte Betätigungselement drehfest mit einer segmentierten Magnetscheibe verbunden, deren magnetisierten Segmente signalerzeugende Elemente darstellen. Die Steuersignalerzeugung erfolgt über zwei Hallsensoren, die nahe der Magnetscheibe angeordnet sind. Eine zweite Scheibe weist eine Drehachse auf, die auf einer Geraden mit der Drehachse der Magnetscheibe liegt und die einen Dauermagneten aufweist. Es besteht eine magnetische Kraftkopplung zwischen der segmentierten Magnetscheibe und dem Dauermagneten, die dazu führt, daß eine über das Betätigungselement initiierte Ansteuerung des Antriebsmotors und eine damit verbundenen Drehung der zweiten Scheibe über die magnetische Kraftkopplung zu einer Mitnahme und fortlaufenden Drehung der Magnetscheibe und somit zu einer ebenfalls fortlaufenden Ansteuerung des Antriebsmotors kommt.

Dies ermöglicht eine fortlaufende Verstellung eines zu verstellenden Objektes bis zum Erreichen eines Endanschlags und zwar unabhängig von einer fortlaufenden manuellen Betätigung des Betätigungselementes. Der Benutzer muß das Betätigungelement nur antippen und damit einen Selbstlauf initiieren. Bevorzugt ist als zweite Scheibe das Schneckenrad des Verstellantriebs vorgesehen.

Die Erfindung erlaubt es, die erfindungsgemäße Schaltvorrichtung dezentral von der Antriebseinheit anzuordnen. Die Schaltvorrichtung ist dabei in einer Variante über elektrische Kabel mit der Antriebseinheit verbunden. Alternativ ist das signalerzeugende oder signalverändernde Teil direkt am Antriebsmotor angeordnet. In diesem Fall ist bevorzugt eine flexible Welle vorgesehen, die eine mechanische gekoppelte Drehbewegung zwischen dem Betätigungselement und dem signalerzeugenden oder signalverändernden Teil herstellt. Durch Ausbildung der Verbindung von Betätigungselement und dem signalerzeugenden bzw. signalverändernden Teil als flexible Welle wird ermöglicht, auf die vorgefundene Geometrie der tragenden Teile einzugehen und ggf. einen Toleranzausgleich vorzunehmen.

Mit Vorteil weist die Schaltvorrichtung einen Deaktivierungsschalter auf, über den die Schaltvorrichtung deaktivierbar ist, so daß ein ungewolltes Verstellen des Verstellobjektes vermieden werden kann.

In einer alternativen Ausführungsform der Erfindung ist das Betätigungselement als unbegrenzt drehbare Kugel ausgebildet, die zur Signalerzeugung bevorzugt ein gleichmäßiges magnetisches Muster aufweist und die nach Art eines Trackballs gelagert ist, so daß sie durch einen Benutzer beliebig manuell verstellbar ist.

Eine erfindungsgemäße Schaltvorrichtung mit Trackball wird dabei bevorzugt für einen Spiegelantrieb eines Kraftfahrzeuges verwendet, da durch Drehung des Trackballs unmittelbar eine Verkippung des Spiegels in mehreren Achsen codierbar ist. Dazu wird durch entsprechende Sensorelemente die Schwenkbewegung des Trackballs in y-Richtung und in z-Richtung erfaßt und die entsprechenden Steuersignale an die elektronische Steuereinheit weitergegeben, die die Steuersignale in Steuerbefehle für den Antriebsmotor des Spiegelantriebs, aufgelöst in Schwenkbewehungen des Spiegels um die y- und z-Achse, umsetzt.

Bevorzugt wird die erfindungsgemäße Schaltvorrichtung sowohl für einen Spiegelantrieb als auch für einen Fensterheberantrieb eines Kraftfahrzeuges verwendet, wobei ein Umschalter zum Anwählen des Spiegelantriebes oder des Fensterheberantriebes vorgesehen ist. Bei Verwendung für einen Fensterheberantrieb wird dabei nur die Bewegung des Trackballs um eine Achse ausgewertet.

Alternativ ist der Trackball nicht beliebig, sondern nur um eine feste Achse bewegbar, so daß sich gegenüber einer Ausbildung des Betätigungselementes als Rad keine grundsätzlichen Unterschiede ergeben.

In einer weiteren Ausgestaltung der Erfindung ist das Betätigungselement als gelenkig gelagerter Hebel, als Kippschalter oder als in einer Kulisse gelagertes Schiebeelement mit definierter Nullage ausgebildet, das ausgehend von der Nullage in mindestens zwei Auslenkrichtungen verstellbar ist. Dabei werden Steuersignale mit einer Frequenz erzeugt, die von dem Maß der Verstellung des Betätigungselementes, das heißt der Auslenkung des Betätigungselementes gegenüber der Nullage, abhängt.

Weitere bevorzugte und vorteilhafte Weiterbildungen der erfindungsgemäßen Schaltvorrichtung und des erfindungsgemäßen Verfahren sind in den Unteransprüchen gekennzeichnet.

Die Erfindung wird nachfolgend unter Bezugnahme auf die Figuren der Zeichnung an mehreren Ausführungsbeispielen näher erläutert. Es zeigen:
- Fig. 1: ein schematisches Blockschaltbild einer erfindungsgemäßen Schaltvorrichtung;
- Fig. 2: eine erste Ausführungsform einer erfindungsgemäßen Schaltvorrichtung, bei der das Betätigungselement mit einer Magnetscheibe gekoppelt ist;
- Fig. 3a: ein erstes signalerzeugendes Element mit zugeordneten Hallsensoren;
- Fig. 3b: ein erstes signalveränderndes Element mit einem zugeordneten optischen Sensor;
- Fig. 3c: ein zweites signalerzeugendes Element mit zugeordneten elektrischen Schleifkontakten;
- Fig. 4: eine Explosivdarstellung einer zweiten Ausführungsform einer erfindungsgemäßen Schaltvorrichtung, bei der eine Kraftkopplung zwischen einem Dauermagneten im Verstellantrieb und einer mit dem Betätigungselement verbundenen Magnetscheibe erfolgt;
- Fig. 5: eine weitere Darstellung der Ausführungsform der Fig. 4;
- Fig. 6: eine Kraftfahrzeugtür mit einem in die Armlehne integriertem Betätigungselement;
- Fig. 7: eine Kraftfahrzeugtür mit einem in die Türverkleidung integrierten Betätigungselement, wobei das Betätigungselement versenkbar ausgeführt ist;
- Fig. 8: eine Kraftfahrzeugtür mit einem in die Türverkleidung Betätigungselement gemäß Fig. 4;
- Fig. 9: eine erste Ausführungsform eines Betätigungselementes;
- Fig. 10: eine zweite Ausführungsform eines Betätigungselements;
- Fig. 11: eine dritte Ausführungsform eines Betätigungselements;
- Fig. 12: schematisch eine nicht durch den Schutz umfang der Ansprüche erfaßte Ausführung einer Schaltvorrichtung, bei der als Betätigungselement ein gelenkig gelagerter Hebel dient;
- Fig. 13: schematisch eine nicht durch den Schutz umfang der Ansprüche erfaßte Ausführungs einer Schaltvorrichtung, bei der als Betätigungselement ein in einer Kulisse gelagertes Schiebeelement dient;
- Fig. 14: schematisch eine Seitenansicht der Ausführung der Figur 13;
- Fig. 15: eine Aufteilung der Frequenzen einer Steuersignal-Impulsfolge in drei Bereiche, denen unterschiedliche Verstellgeschwindigkeiten des Verstellobjektes zugeordnet werden;
- Fig. 16: ein als Kugel ausgebildetes Betätigungselement und
- Fig. 17: ein weiteres als Kugel ausgebildetes Betätigungselement.

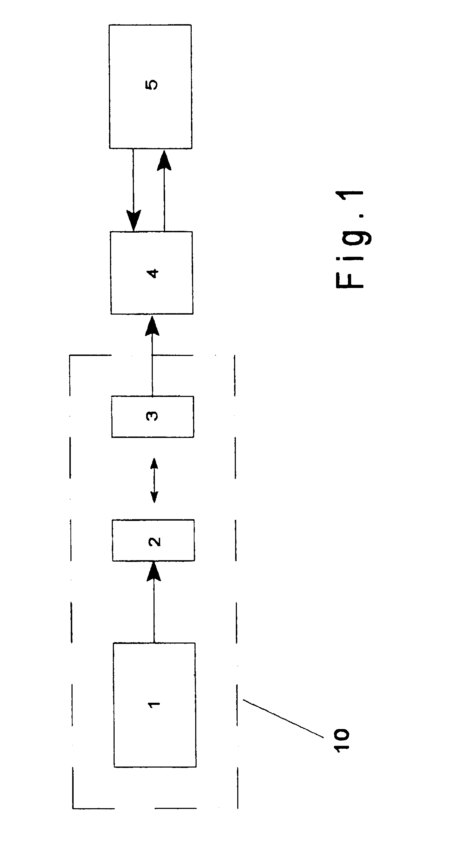

Figur 1 zeigt schematisch die Anordnung einer erfindungsgemäßen Schaltvorrichtung 10 mit einer elektronischen Steuereinheit 4 und einem fremdkraftbetätigten Verstellantrieb 5. Der Verstellantrieb 5 kann elektrisch, pneumatisch oder hydraulisch angetrieben werden. Die Schaltvorrichtung 10 besteht aus einem manuell betätigbaren Betätigungselement 1 sowie Mitteln zur Signalerzeugung, die dem Betätigungselement 1 zugeordnet sind. Das Betätigungselement 1 ist über einen Bereich verstellbar, der in einer ersten Variante der Erfindung begrenzt und in einer zweiten Variante der Erfindung unbegrenzt ist. Vorzugsweise erfolgt sowohl die Verstellung des Betätigungselements 1 als auch die Verstellung des Verstellobjekts selbst, etwa einer Fensterscheibe, stufenlos.

Die Mittel zur Signalerzeugung bestehen aus signalerzeugenden oder signalverändernden Elementen 2 sowie aus mit diesen in Wechselwirkung stehenden Sensorelementen 3. In Abhängigkeit von der Geschwindigkeit einer Verstellung des Betätigungselements 1 oder in Abhängigkeit von der absoluten Position des Betätigungselements 1 wird an den Sensorelementen 3 mittels der mit dem Betätigungselement 1 gekoppelten signalgebenden bzw. signalverändernden Elemente 2 ein Signal erzeugt bzw. ein vorhandenes Grundsignal verändert. Das erzeugte Steuersignal weist eine variable Frequenz auf, die direkt von der Dynamik oder dem Maß der Verstellung des Betätigungselementes abhängt.

Bei der Schaltvorrichtung 10 handelt es sich um eine rein elektrische Schaltvorrichtung 10, an der kein Laststrom anliegt.

Die Steuersignale werden an eine elektronische Steuereinheit 4 weitergegeben, die eine arithmetisch-logische Einheit aufweist. Die elektronische Steuereinheit 4 erzeugt in Abhängigkeit von den eingehenden Steuersignalen Steuerbefehle für den Verstellantrieb 5. Die eingehenden Steuersignale codieren die Verstellgeschwindigkeit, den Verstellweg, die Position, die Verstelldauer und/oder die Richtung der Verstellung eines zu verstellenden Objektes, wobei die Interpretion des Steuersignals durch die elektronische Steuereinheit 4 erfolgt.

Der Verstellantrieb 5 weist einen Antriebsmotor und ein Getriebe auf, das die Rotationsbewegung der Antriebswelle des Antriebsmotors in eine translatorische Bewegung des zu verstellenden Objektes überträgt, so daß die gewünschte Verstellung des zu verstellendes Objektes erfolgt. Dabei wird dem Antriebsmotor nach Vorgabe der Steuerbefehle ein geregelter Motorstrom zugeführt. Entsprechend den codierten Werten erfolgt eine positionsbezogene oder dynamisch beeinflußbare Verstellung des Verstellobjekts.

Bevorzugt hängt die Erzeugung von Steuerbefehlen für den Verstellantrieb 5 jedoch nicht allein von den Steuersignalen der Schaltvorrichtung 10 ab. Vielmehr werden der elektronischen Steuereinheit 4 in an sich bekannter Weise weitere Steuersignale zugeführt. Insbesondere ist dem Antriebsmotor eine Vorrichtung zur Positionserkennung zugeordnet, die die Umdrehungen der Motorwelle erfaßt und mindestens einen Impuls pro Umdrehung an die elektronische Steuereinheit abgibt.

Entsprechend der absoluten Zahl der abgegebenen Signale wird auf die Position des zu verstellenden Objektes, etwa einer Fensterscheibe geschlossen. Außerdem findet in der elektronischen Steuereinheit 4 eine zeitabhängige Auswertung der von der Vorrichtung zur Positionserfassung abgegebenen Signale statt, so daß eine extern bewirkte Änderung der Geschwindigkeit des Verstellobjektes erkannt wird. Weiter werden der elektronischen Steuereinheit 4 ggf. Steuersignale von Überwachungssensoren zugeführt, die etwa Teil eines direkt erkennenden Einklemmschutzsystems sind.

Durch die Berücksichtigung der Position des zu verstellenden Elements sind Endlagen sanft anfahrbar. Die Berücksichtigung zusätzlicher Sensorsignale von Sensoren im Antrieb ermöglicht das Feststellen von Störungen beim Ablauf der Verstellung.

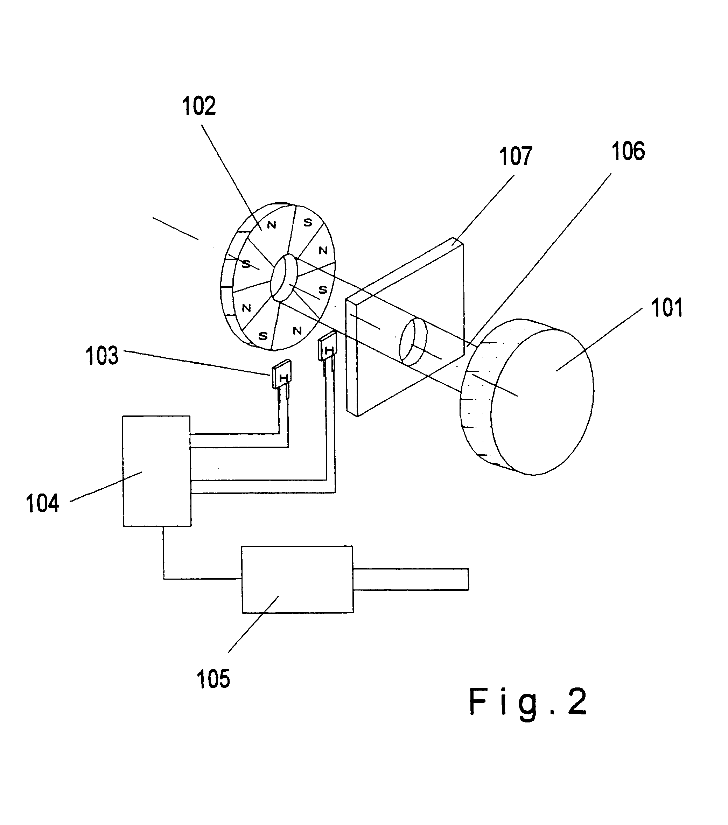

In Figur 2 ist eine erste Ausführungsform der erfindungsgemäßen Schaltvorrichtung dargestellt. Ein manuell betätigbares Betätigungselement 101 ist als unbegrenzt drehbares Stellrad ausgebildet, dem keine festen Ein- und Ausschaltzustände und keine absolute Nullage zugeordnet ist. Das Stellrad 101 ist über eine feststehende Achse 106 drehfest mit einer Magnetscheibe 102 verbunden. Die Magnetscheibe 102 ist dabei hinter der Türinnenverkleidung 107 einer Kraftfahrzeugtür angeordnet. Die Magnetscheibe 103 weist alternierend N-magnetisierte und S-magnetisierte Bereiche auf. Seitlich der Magnetscheibe 102 sind zwei Hallsensoren 103 angeordnet, die mit einer elektronischen Steuereinheit 104 zur Erzeugung von Steuerbefehlen für einen Antriebsmotor 105 verbunden sind.

Bei einer Drehung des drehbaren Rades 101 wird aufgrund der drehfesten Kopplung über die feststehende Achse 106 die Magnetscheibe 102 gedreht. Bei Rotation der Magnetscheibe 102 werden die beiden seitlich der Magnetscheibe 102 angeordneten Hallsensoren 103 jeweils von einem veränderlichen Magnetfeld durchsetzt. Die Frequenz der Veränderung des Magnetfeldes wird dabei durch die Drehgeschwindigkeit sowie die Anzahl der magnetisierten Bereiche der Magnetscheibe 102 bestimmt. Je größer die Anzahl der magnetisierten Bereiche der Magnetscheibe 102 ist, desto höher wird eine Drehung der Magnetscheibe 102 aufgelöst.

Die an den beiden Hallsensoren 103 bei einer Drehung der Magnetscheibe 102 auftretenden Magnetfeldänderungen werden in zwei entsprechend dem Winkelabstand der Hallsensoren 103 zueinander versetzte binäre Impulsfolgen umgesetzt. Die jeweils am Hallsensor 103 anliegende magnetische Flußdichte erzeugt eine der magnetischen Flußdichte im wesentlichen proportionale Hallspannung, die in an sich bekannter Weise mittels eines integrierten Schmitt-Triggers (nicht dargestellt) in eine binäre Impulsfolge umgewandelt wird. Durch Zählen der Impulszahl pro Zeiteinheit ist die Drehzahl und durch Vergleich der beiden Impulsfolgen die Drehrichtung der Magnetscheibe 102 und damit des als Stellrad 102 ausgebildeten Betätigungselements bestimmbar.

Die drehfest mit dem Stellrad 101 verbundene Magnetscheibe 102 stellt ein signalerzeugendes Element dar, das zur Signalerzeugung mit den zugeordneten Hallsensoren 103 in Wechselwirkung steht, wobei bei einer Drehung der Magnetscheibe 102 Steuersignale für die elektronische Steuereinheit 104 erzeugt werden.

Die elektronische Steuereinheit 104 ermittelt durch Zählen der Impulsanzahl pro Zeiteinheit (Impulsfrequenz) die Drehzahl und durch Vergleich der beiden Impulsfolgen die Drehrichtung der Magnetscheibe 102 bzw. des drehfest mit der Magnetscheibe 102 verbundenen Stellrades 101. Auf der Grundlage dieser Werte werden Steuerbefehle für den Antriebsmotor 105 erzeugt und wird diesem ein entprechender Motorstrom zugeführt. Auf diese Weise ist es möglich, durch Bedienung des Rades 101 direkt die Ansteuerung des Antriebsmotors 105 und damit zu jedem Zeitpunkt die Geschwindigkeit einer Verstellung eines Verstellobjektes zu steuern.

Bei langsamer Drehung des Rades 101 in eine bestimmte Richtung erfolgt eine Verstellung des Verstellobjekts in die entsprechende Richtung und mit einer der langsamen Drehung des Stellrades 101 entsprechenden geringen Geschwindigkeit. Beispielsweise entspricht bei einem Fensterheberantrieb eine langsame 90°-Drehung des Stellrades 101 einem Scheibenhub von 1 cm. Bei schneller Drehung des Stellrades 101 erfolgt eine grobstufigere Verstellung der Fensterscheibe mit vergleichsweise größerer Verstellgeschwindigkeit. In diesem Fall entspricht eine 90°-Drehung des Schalters beispielsweise einem Scheibenhub von 10 cm.

Der Verstellweg der Fensterscheibe (Scheibenhub) ist eindeutig durch die vom Benutzer gewählte Drehgeschwindigkeit des Stellrades 101 und die Dauer einer Drehung des Stellrades 101 bestimmt.

Alternativ gibt die elektronische Steuereinheit 104 die Geschwindigkeitswerte der Magnetscheibe 102 jedoch nicht direkt an den Antriebsmotor 105 weiter. Vielmehr erfolgt durch die elektronische Steuereinheit 104 eine Zuordnung der Frequenzen der Impulsfolge auf bestimmte Geschwindigkeiten einer Verstellung des zu verstellenden Objektes.

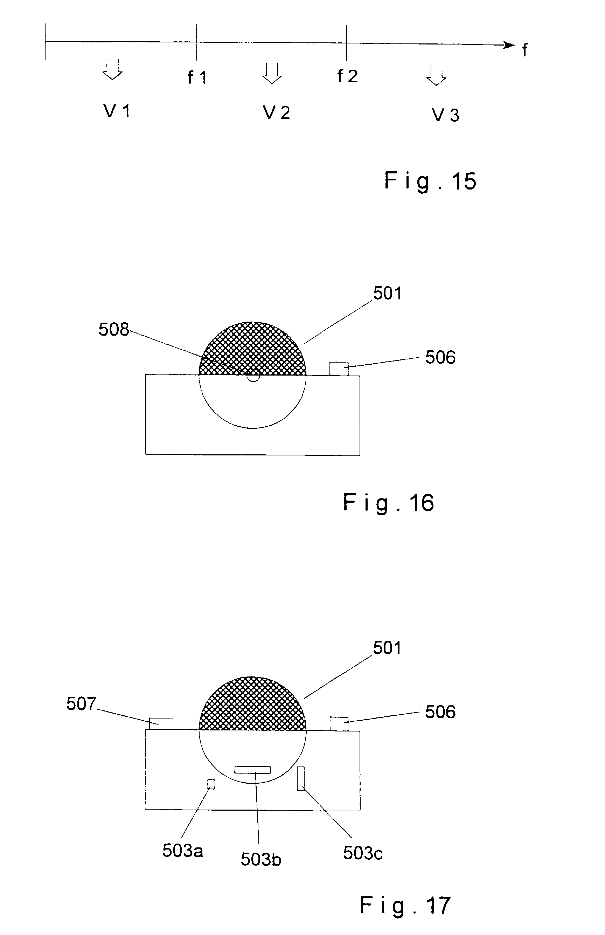

Ein Beispiel für die Zuordnung der Frequenzen der Impulsfolge zu bestimmten Geschwindigkeitswerten einer Verstellung des zu verstellenden Objektes ist schematisch in Figur 15 dargestellt. Die möglichen Impulsfrequenzen sind in drei Bereiche eingeteilt. Der erste Bereich geht von 0 bis zu einem Wert f1; der zweite Bereich von dem Wert f1 bis zu einem Wert f2; der dritte Bereich umfaßt alle Frequenzen, die größer als der Wert f2 sind. Die elektronische Steuereinheit 104 ordnet unter dem ersten Wert f1 liegende Impulsfrequenzen eine vorgegebenen konstanten Mindestverstellgeschwindigkeit V1 zu. In diesem Bereich liegt ein verringertes Übersetzungsverhältnis zwischen der Verstellung des Betätigungselementes 101 und dem Verfahrweg eines zu verstellenden Objektes vor. Die Mindestgeschwindigkeit V1 beträgt einen Bruchteil der üblichen Geschwindigkeit für die Verstellung des entsprechenden Objektes.

Es ist in diesem ersten Bereich in einfacher Weise eine genaue Positionierung des zu verstellenden Objektes möglich. Es werden die bei einer Drehung des Stellrades 101 erzeugten Impulse gezählt und daraus, ausgehend von der bekannten Position des Verstellobjektes, ein bestimmter Verstellweg bestimmt. Da die Mindestgeschwindigkeit V1 fest vorgegeben ist, kann durch Drehung des Stellrades 101 um einen bestimmten Winkel eine bestimmte Position vorgewählt werden. Beispielsweise könnte eine 90°-Drehung des Stellrades 101 einem Scheibenhub von 1cm entsprechen. Durch die langsame Mindestgeschwindigkeit in dem betrachteten Bereich zwischen 0 und f1 ist eine genaue Positionierung des Verstellobjektes möglich.

Sofern die Frequenz der Impulsfolge zwischen dem Wert f1 und dem Wert f2 liegt, wird dieser Frequenz eine konstante mittlere Verstellgeschwindigkeit V2 zugeordnet. Hier ist das Übersetzungsverhältnis zwischen der Verstellung des Betätigungselementes 101 und dem Verfahrweg des Verstellobjektes größer. Die mittlere Verstellgeschwindigkeit V2 entspricht bei einem Fensterheberantrieb etwa der üblichen Verstellgeschwindigkeit zum Verstellen einer Fensterscheibe. Da die Verstellgeschwindigkeit V2 konstant ist, kann auch hier über eine Drehung des Stellrades 101 um einen bestimmten Winkel ein bestimmter Verstellweg realisiert und eine bestimmte Position angewählt werden.

Sofern die Impulsfrequenz der Steuersignal-Impulsfolge über dem Wert f2 liegt, interpretiert die elektronische Steuereinheit 104 die hohe Impulsfrequenz als Befehl, die Fensterscheibe mit der maximalen Verstellgeschwindigkeit V3 in eine der Endlagen, das heißt an den oberen oder unteren Anschlag, zu verfahren. Die Geschwindigkeit V3, mit der die Endlagen angefahren werden, entspricht der maximal zu erreichenden Verstellgeschwindigkeit. Es kann aber auch etwa die übliche Verstellgeschwindigkeit V2 beibehalten werden.

In alternativen Ausführungsbeispielen ist vorgesehen, daß die elektronische Steuereinheit 104 die Frequenzen der Impulsfolge nur teilweise einer festen Verstellgeschwindigkeit des Verstellobjektes zuordnet. Beispielsweise kann vorgesehen sein, daß Impulsfolgen mit einer Frequenz im Bereich zwischen 0 und f1 nicht eine Mindestgeschwindigkeit, sondern in Abhängigkeit von der aktuellen Impulsfrequenz eine variable Geschwindigkeit zugeordnet wird. Eine langsame oder schnelle Drehung des Rades 101 bewirkt eine entsprechend langsame oder schnelle Verstellung des Verstellobjektes. Dies ermöglicht eine in hohem Maße individuelle Verstellung des Verstellobjektes. Letztlich kann durch die elektronische Steuereinheit 104 eine beliebige Zuordnung der Impulsfrequenzen zu Verstellgeschwindigkeiten einer Verstellung des Verstellobjektes erfolgen.

Wie anhand der Figur 15 aufgezeigt, wird die durch die Impulsfrequenz des Steuersignals codierte Verstellgeschwindigkeit nicht notwendig direkt in eine entsprechende Verstellgeschwindigkeit des Verstellobjekts umgesetzt, sondern es wird von der elektronischen Steuereinheit 104 eine Funktion der Impulsfrequenz gebildet, die etwa Frequenzen, die einen bestimmten Wert überschreiten, einer festen, maximalen Verstellgeschwindigkeit zuordnet.

Die Ausführungsform der Figur 2 wird bei Verwendung für einen Fensterheberantrieb oder ein Schiebedach bevorzugt in Verbindung mit einem indirekten Einklemmschutz angewendet. Hierzu wird mittels einer Vorrichtung zur Positionserkennung in an sich bekannter Weise die Drehrichtung und Drehzahl der Antriebwelle des Antriebsmotors 105 erfaßt. In der der elektronischen Steuereinheit 104 findet eine zeitabhängige Auswertung der von der Vorrichtung zur Positionserkennung abgegebenen Sigale statt, so daß eine durch einen Einklemmvorgang bewirkte Änderung der Geschwindigkeit der Fensterscheibe oder des Schiebedachs erkannt und eine weitere Verstellung sofort gestoppt wird.

Es wird darauf hingewiesen, daß sich das hier beschriebene erste Ausführungsbeispiel der erfindungsgemäßen Schaltvorrichtung 10 nicht auf die Verwendung einer segmentierten Magnetscheibe 102 beschränkt ist. Vielmehr können beliebige signalerzeugende und signalverändernde Elemente verwendet werden.

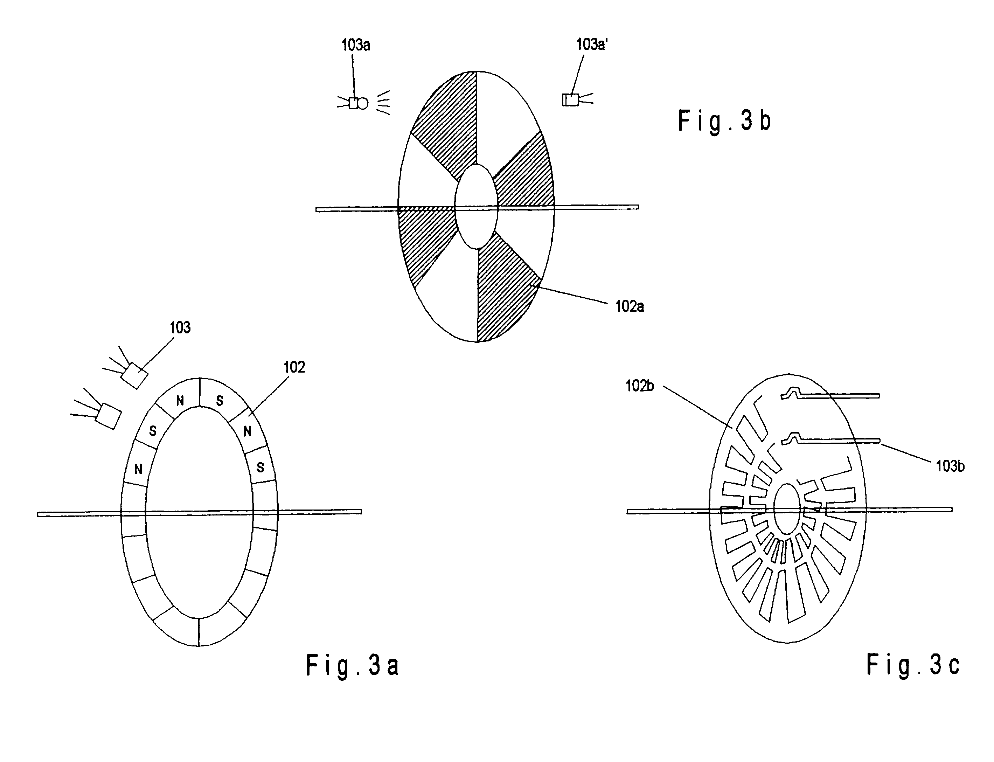

In den Figuren 3a bis 3c sind Beispiele für mögliche signalerzeugende bzw. signalverändernde Elemente dargestellt. Figur 3a zeigt wiederum eine segmentierte Magnetscheibe 102, wobei die magnetisierten Segmente lediglich entlang des Außenrings der Magnetscheibe 102 angeordnet sind. Wiederum sind der Magnetscheibe 102 zwei Hallsensoren 103 zugeordnet, die bei Rotation der Magnetscheibe 102 jeweils von einem veränderlichen Magnetfeld durchsetzt werden. Der Einsatz von Magnetscheibe 102 und Hallsensoren 103 als signalerzeugendem Element und korrespondierenden Sensorelementen bietet sich an, wenn zur Auswertung bzw. Ansteuerung der Motorbewegung ohnehin Hallelemente einsetzt werden.

In Figur 3b weist eine drehfest mit einem Stellrad verbundene Scheibe 102a Schlitzblenden auf, die bei einer Drehbewegung der Scheibe 102a intermittierend zwischen eine Lichtquelle 103a und eine als Sensorelement dienende Leuchtdiode 103a' treten. Alternativ weist die Drehscheibe 102a Lochblenden auf. Wiederum entsteht eine binäre Impulsfolge, die einer elektronischen Steuereinheit 104 zugeführt wird. Um eine Drehrichtungserkennung zu ermöglichen, ist beispielsweise eine drehrichtungscodierte Scheibe 102a vorgesehen. Alternativ sind zwei versetzt angeordnete Anordnungen von Lichtquelle 103a und Leuchdiode 103a' vorgesehen.

Die Scheibe 102a stellt ein signalveränderndes Element dar, das die Beleuchtung der Leuchtdiode 103a' als Grundsignal verändert. Die Lichtfrequenz der Leuchtdiode 103a' ist so gewählt, daß Störungen des Tageslichts ausgeschlossen sind. Der Einsatz von Schlitz- oder Lochblenden in Verbindung mit Leuchtdioden ist besonders günstig, wenn die Verschmutzungsgefahr äußerst gering ist. Anderenfalls kann das erzeugte Steuersignal leicht einen hohen Rauschanteil aufweisen. Bevorzugt werden die Leuchtdioden zusätzlich als Schalterbeleuchtung verwendet.

In Figur 3c dienen als signalerzeugende Elemente auf einer mit einem Stellrad drehfest verbundenen Scheibe 102b meanderförmig angeordnete Leiterbahnen. Diese werden durch zwei elektrische Schleifkontakte 103b kontaktiert. Bei einer Drehung der Scheibe 102b ändert sich periodisch die über den beiden Schleifkontakten 103b abfallende Spannung, so daß ein periodisches Signal erzeugt wird. Dieses wird wiederum der elektronischen Steuereinheit 104 zugeführt. Diese Anordnung ist besonders kostengünstig.

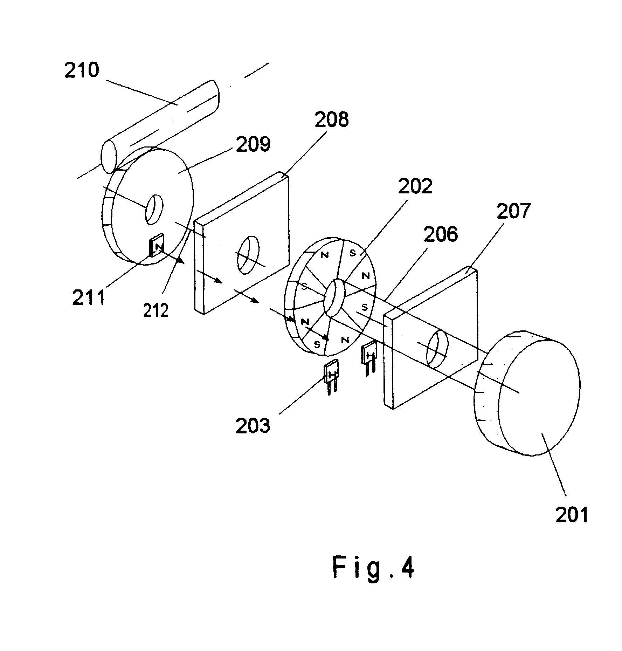

In Figur 4 ist eine zweite Ausführungsform der erfindungsgemäßen Schaltvorrichtung 10 dargestellt. Wie bei Figur 2 ist als Betätigungselement ein endlos drehbares Stellrad 201 ohne absolute Nullage und ohne definierte Ein- und Ausschaltzustände vorgesehen. Das Rad 201 ist über eine feststehende Achse 206 drehfest mit einer segmentierten Magnetscheibe 202 verbunden. Der Magnetscheibe 202 sind zwei Hallsensoren 203 zugeordnet, die in Abhänigkeit von der Drehung der Magnetscheibe 202 Steuersignale für die elektronische Steuereinheit erzeugen. Die elektronische Steuereinheit erzeugt wiederum Steuerbefehle für den Antriebsmotor. Insofern wird auf die Erläuterungen zu Fig. 2 verwiesen.

Gemäß Fig. 4 befindet sich in der Verlängerung der Achse 206 ein Schneckengetriebe, das in einem Getriebegehäuse mit einem Getriebegehäusedeckel 208 gelagert ist. Es handelt sich dabei um das Schneckengetriebe des Verstellantriebs, das die Rotationsbewegung des Antriebsmotors in eine translatorische Bewegung des Verstellobjekts umsetzt. Hinter dem Gehäusedeckel 208 befindet sich auf einer Geraden 212 mit der Achse 206 das Schneckenrad 209 des Schneckengetriebes. Das Schneckenrad 209 und die Magnetscheibe 202 sind also in paralleler Ausrichtung hintereinander entlang einer Geraden 212 angeordnet, jedoch nicht drehfest miteinander verbunden. Dabei kämmt das Schneckenrad 209 mit einer Antriebsschnecke 210, die mit der Antriebswelle des Antriebsmotor gekoppelt ist. Das Schneckenrad 209 wiederum ist mit einer nicht dargestellten Abtriebswelle zum Antreiben etwa einer Seiltrommel verbunden.

Am Schneckenrad 209 ist fest ein Dauermagnet 211 angeordnet. Zwischen dem Dauermagneten 211 und der Magnetscheibe 202 besteht dabei eine magnetische Kraftkopplung, wie durch die Pfeile angedeutet ist.

Die Funktionsweise dieser Anordnung ist wie folgt. Über eine manuelle Drehung des Stellrades 201 und eine korrespondierende Drehung der mit dem Stellrad 201 fest verbundenen Magnetscheibe 202 werden mittels der Sensorelemente 203 Steuersignale für die elektronische Steuereinheit generiert, die die Drehrichtung und Drehgeschwindigkeit des Stellrades 201 bzw. der Magnetscheibe 202 codieren. Entsprechend der Drehgeschwindigkeit des Stellrades 201 wird der Antriebsmotors des Verstellantriebs durch die elektronische Steuereinheit angesteuert. Die Rückmeldung über die aktuelle Verstellgeschwindigkeit des Verstellobjekts erfolgt über einen mit dem Verstellantrieb verbundenenen Sensor. Dadurch wird eine Geschindigkeitsregelung möglich. Alternativ erfolgt eine konstante Ansteuerung des Antriebsmotors durch die elektronische Steuereinheit, so daß der Antriebsmotor mit einer festen Drehgeschwindigkeit angetrieben wird.

Die Antriebswelle des Antriebsmotors ist fest mit der mit dem Schneckenrad 209 kämmenden Schnecke 210 verbunden. Über das Stellrad 201 wird somit eine Drehbewegung des Schneckenrades 209 initiiert.

Nachdem die Drehbewegung des Schneckenrades 209 initiiert ist, wird von nun an die Magnetscheibe 202 durch die magnetische Kraftkopplung zwischen der Magnetscheibe 202 und dem mit dem Schneckenrad 209 fest verbundenen Dauermagneten 211 mitgedreht. Diese Mitnahme erfolgt auch, wenn seitens des Bedieners kein Eingriff auf das Stellrad 201 mehr erfolgt. Die mitgedrehte Magnetscheibe 202 erzeugt aufgrund ihrer Drehung weitere Hallimpulse, wodurch der Antriebsmotor zur weiteren Umdrehung veranlaßt wird. Erst wenn das Stellrad 201 festgehalten wird, stoppt der Antriebsmotor. Anderenfalls fährt das zu verstellende Objekt bis zu einem Anschlag, wodurch das Schneckenrad 209 und somit auch die daran magnetisch gekoppelte Magnetscheibe 202 zum Stillstand kommen und in den Hallelementen 203 keine Signale mehr generiert werden.

Diese Variante wird vorzugsweise in Verbindung mit einem direkt erkennenden Einklemmschutz verwendet. Hierzu sind berührungslos und/oder berührend arbeitende Sensoreinrichtungen vorgesehen, deren Signale ebenfalls der elektronischen Steuereinheit zugeführt werden.

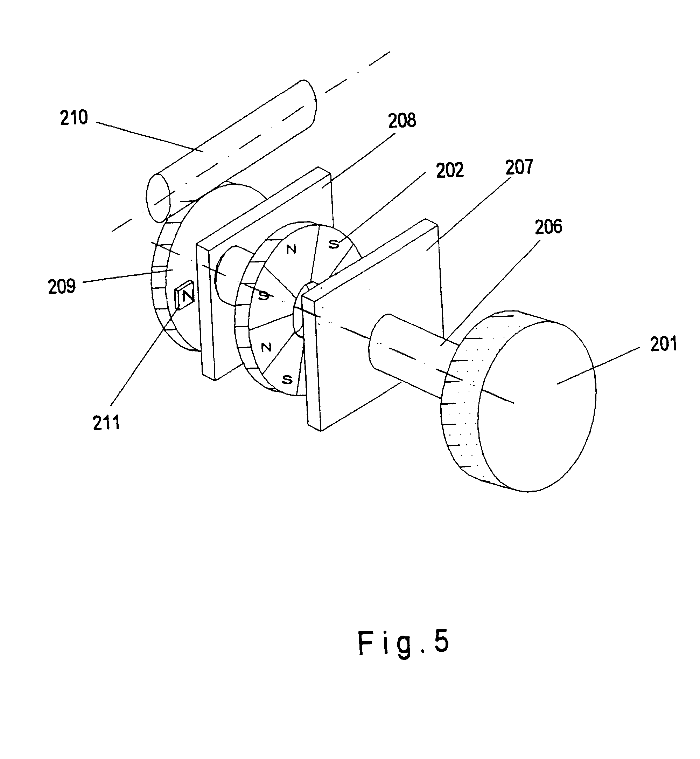

Figur 5 zeigt eine weitere Darstellung der Ausführungsform der Figur 4. Hier hat sich das Schneckenrad 209 mit dem Dauermagneten 211 gegenüber der Fig. 4 um 90° gedreht und hat die Magnetscheibe 202 entsprechend mitgedreht. Der Getriebegehäusedeckel 208 besteht aus einem Material, das die magnetische Kraftkopplung zwischen der segmentierten Magnetscheibe 202 und dem Dauermagneten 211 nicht stört. Insbesondere wird ein Kunststoffmaterial verwendet.

In der Ausführungsform der Fig. 16 wird als Betätigungselement nicht ein endlos drehbares Stellrad, sondern eine um eine definierte Achse 508 drehbare Kugel 501 verwendet. Diese ist wie ein Trackball ausgebildet, wie er etwa bei Corsorsteuerelementen für einen Computer Anwendung findet. Ebenso wie das Stellrad hat auch der Trackball 501 keine absolute Nullage und weist keine definierten Ein- und Ausschaltzustände auf. Der Trackball 501 weist ein gleichmäßges magnetisches Muster (nicht dargestellt) auf, z.B. entsprechend der Facettenanordnung eines Fußballs, so daß bei Bewegung des Trackballs 501 bei dem Trackball 501 zugeordneten Sensorelementen ein veränderliches Magnetfeld auftritt. Entsprechend werden Steuersignale generiert und einer elektronischen Steuereinheit zugeführt. Die weitere Funktionsweise erfolgt wie in bezug auf die Ausführungsbeispiele der Figuren 2, 4 und 5 beschrieben. Bevorzugt ist der Trackball 501 für eine bessere Bedienbarkeit bei Anschalten des Fahrlichts beleuchtet.

In der alternativen Ausführung der Erfindung gemäß Figur 17 ist das als Trackball 501 ausgebildete Betätigungselement nicht lediglich um eine Achse, sondern beliebig verstellbar. Die Bewegung des Trackballs 501 in y-Richtung und z-Richtung wird durch Sensorelemente 503a, 503b, 503c erfaßt und einer elektronischen Steuereinheit zugeführt. Ein derartiges Betätigungselement ist besonders für eine Spiegelverstellung in einem Kraftfahrzeug geeignet, da die Bewegung des Trackballs 501 auf mehrere Verstellachsen des Spiegels gleichzeitig einwirken kann und so eine Verstellung des Spiegels um die y-Achse und die z-Achse kodiert.

Es ist an der Schaltvorrichtung ein Deaktivierungsschalter 506 vorgesehen, durch den der Trackball 501 deaktivierbar ist, um eine ungewollte Verstellung des Verstellobjektes 501 durch versehentliches Verdrehen des Trackballs 501 zu vermeiden.

Weiter ist ein Umschalter 507 vorgesehen, durch den wahlweise zwei verschiedene Antriebe auswählbar sind. Besonders geeignet ist diese Ausgestaltung der Erfindung für eine Schaltvorrichtung zum Steuern eines Fensterheberantriebes sowie einer Spiegelverstellung eines Kraftfahrzeuges. Je nach Wahl des Schalters 507 wird entweder eine Spiegelverstellung oder eine Verstellung einer Fensterscheibe des Kraftfahrzeuges bewirkt. Sofern der beliebig drehbare Trackball 501 für einen Fensterheberantrieb verwendet wird, wird die Bewegung des Trackballs 501 um nur eine Achse ausgewertet, d.h. Signale des Trackballs 501 in die nicht auszuwertende Richtung werden ignoriert.

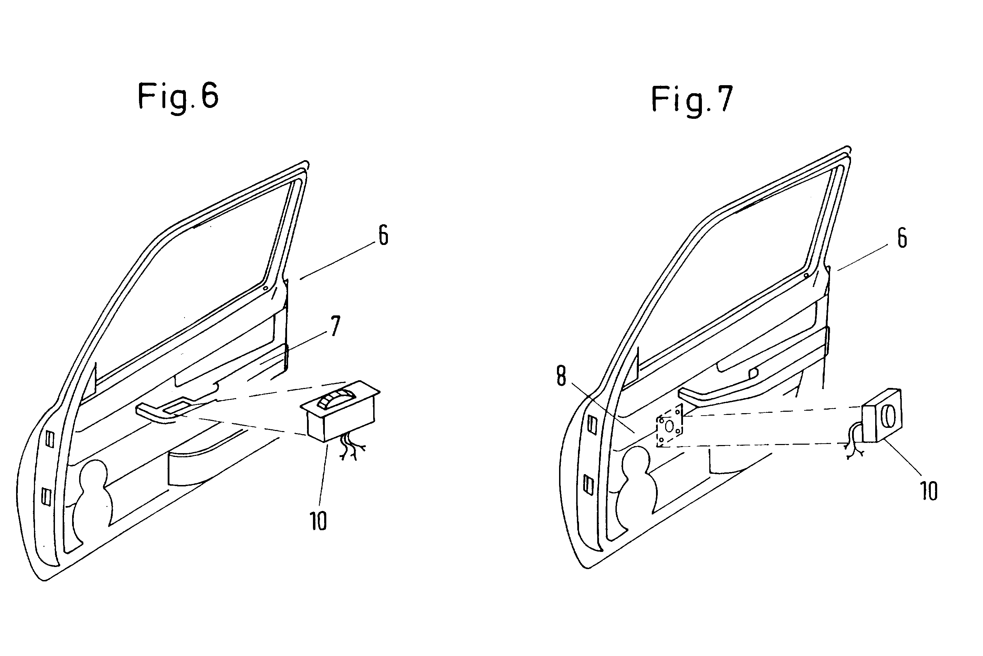

Figur 6 zeigt eine Kraftfahrzeugtür 6, bei der eine erfindungsgemäße Schaltvorrichtung 10 zum Steuern eines Verstellantriebs in die Armlehne 7 integriert ist. Der manuelle Zugriff erfolgt dabei von oben. In dieser Variante ist die Schaltvorrichtung 10 über elektrische Verbindungen mit dem Verstellantrieb verbunden. Die elektronische Steuereinheit 4 (vgl. Fig. 1) ist dabei bevorzugt in das Getriebegehäuse integriert, so daß eine kompakte Baugruppe entsteht.

In Figur 7 ist die erfindungsgemäße Schaltvorrichtung 10 in die Türinnenverkleidung 8 der Kraftfahrzeugtür 6 integriert. Der manuelle Zugriff erfolgt dabei von der Seite. Die Schaltvorrichtung 10 ist in die Türinnenverkleidung 8 versenkbar ausgeführt, wobei die Schaltvorrichtung 10 auf Druck durch eine Feder herausgeschoben und somit leicht zugänglich ist. Hierdurch werden bei Nichtgebrauch der Schaltvorrichtung 10 überstehende Konturen vermieden. Das Prinzip entspricht dem Prinzip eines Druckkugelschreibers. Die Schaltvorrichtung 10 ist wiederum über elektrische Verbindungen mit dem Verstellantrieb 5 verbunden.

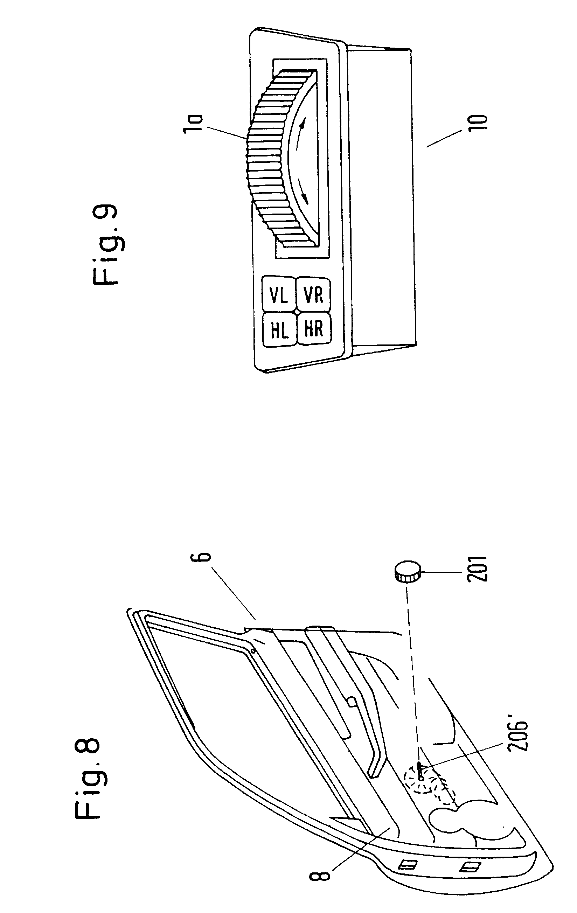

In Figur 8 ist schematisch eine Schaltvorrichtung gemäß den Fig. 4 und 5 dargestellt, die sich hinter der Türverkleidung im Trockenraum der Kraftfahrzeugtür 6 befindet. Lediglich das Betätigungselement 201 ist in die Türinnenverkleidung 8 integriert. Die Schaltvorrichtung, die elektronische Steuereinheit und der Antriebsmotor bilden bis auf das Betätigungselement 201 eine auf einer Trägerplatte angeordnete modulare Einheit, wobei die Magnetscheibe 201 direkt am Antriebsmotor angeordnet ist.

Das Betätigungselement 201 ist über eine flexible Welle 206' mit der Magnetscheibe 202 (vgl. Fig. 4 und 5) verbunden. Die flexible Welle 206' ermöglicht eine mechanisch gekoppelte Drehbewegung zwischen dem Betätigungselement 201 und der Magnetscheibe. Dies hat folgenden Vorteil: Sofern der Fensterheberantrieb als fertiges Modul in das Türinnenblech einer Kraftfahrzeugtür 6 eingesetzt wird, sind häufig Fertigungstoleranzen der entsprechenden Aufnahmebereiche für das Modul zu berücksichtigen. Diese Toleranzen können bis zu einem Zentimeter betragen. Da die Fensterhebeantriebe als Einheit ausgeführt sind, ist ein Toleranzausgleich durch konstruktive Maßnahmen am Fensterhebeantrieb kaum möglich. Durch Ausbildung der Verbindung des in der Türinnenverkleidung 8 angeordneten Betätigungselementes 201 mit der auf dem Modul angeordneten Magnetscheibe 202 als flexible Welle 206' wird jedoch ermöglicht, einen Toleranzausgleich vorzunehmen.

In Figur 9 ist eine gemäß Figur 6 in die Armlehne einer Kraftfahrzeugtür integrierte Schaltvorrichtung 10 dargestellt. Das Stellrad 1a ist in beiden Richtungen beliebig drehbar, so daß eine Verstellung der Fensterscheibe der Kraftfahrzeugtür in der gewünschten Richtung und mit der gewünschten Geschwindigkeit erfolgen kann. Über Umschalttasten VL, VR, HL und HR sind die Fensterscheiben des Kraftfahrzeugs anwählbar, so daß die Fensterscheiben eines Kraftfahrzeugs zentral von der Schaltvorrichtung 10 aus nach entsprechender Anwahl einzeln oder zusammen anwählbar und verstellbar sind.

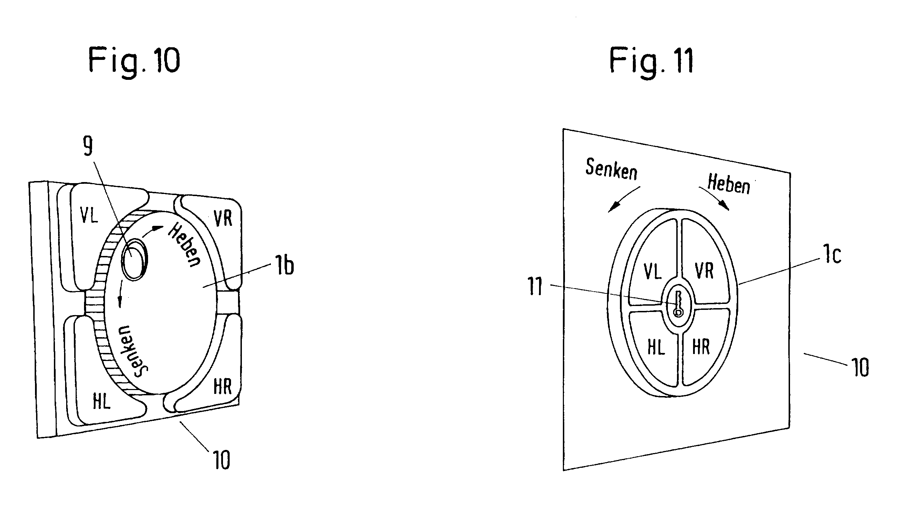

Figur 10 zeigt eine in die Türverkleidung einer Kraftfahrzeugtür integrierte Schaltvorrichtung 10, bei der das Stellrad 1b versenkbar ist. Bei Druck auf das Stellrad 1b wird dieses durch eine Feder herausgeschoben, so daß das Stellrad 1b auch von oben bedienbar ist. Aufgrund der Bedienungsmulde 9 ist das Stellrad 1b jedoch auch im eingeschobenen Zustand einfach zu verstellen. Wiederum sind Umschalttasten VL, VR, HL und HR zur Ansteuerung der Fenster des Kraftfahrzeugs vorgesehen.

Bei der in Figur 11 dargestellten, versenkbaren Schaltvorrichtung 10 sind die Umschalttasten VL, VR, HL und HR in das Stellrad lc integriert. Darüber hinaus ist eine Umschalttaste 11 zur Aktivierung bzw. Deaktivierung einer Kindersicherung vorgesehen. Bei Aktivierung der Taste 11 sind die Fenster im Fond über die dort befindlichen Schalter nicht mehr zu verstellen.

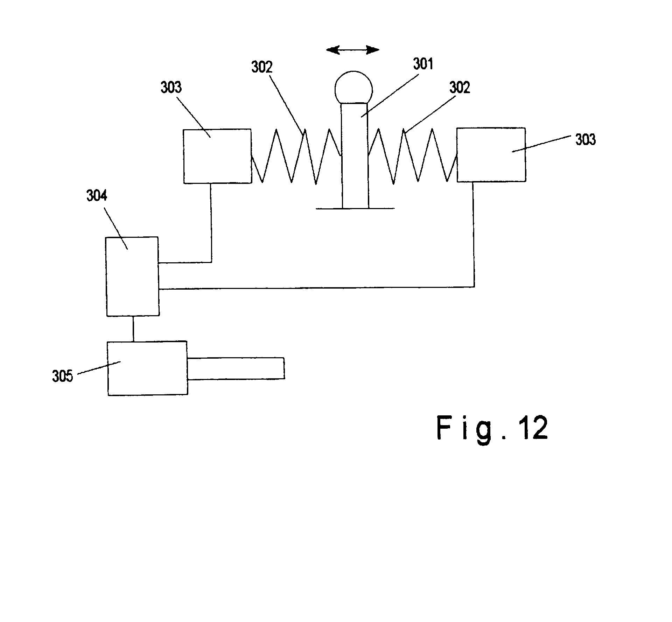

In Figur 12 ist eine nicht durch den Schutz umfang der Ansprüche erfaßte Ausführung dargestellt. Als Betätigungselement dient ein gelenkig gelagerter Hebel 301, der jeweils über ein Federelement 302 mit einer Sensoreinrichtung 303 verbunden ist. Von der Ruhelage ausgehend, in der sich die von den Federn 302 auf den Hebel 301 ausgeübten Kräfte ausgleichen, ist der Hebel 301 in zwei Auslenkrichtungen bewegbar. Bei einer Auslenkung des Hebels 301 wird jeweils eine Feder 302 gespannt. Die damit einhergehende Kraft wird im entsprechenden Sensorelement 303 gemessen und dort in eine binäre Impulsfolge umgewandelt. Dabei ist die Frequenz der erzeugten Impulsfolge der auftretenden Kraft proportional.

Bei einer starken Auslenkung des Hebels 301 wird somit eine Impulsfolge mit einer hohen Frequenz erzeugt. Die Impulsfolge wird der elektronischen Auswerteinheit 304 zugeführt, die wie zuvor Steuerbefehle für den Antriebsmotor 305 generiert. Bei einer starken Auslenkung des Hebels 301, einer hohen Federkraft und entsprechend hochfrequenten Impulsfolge wird eine schnelle Verstellung eines zu verstellenden Objektes bewirkt. Die Geschwindigkeit der Verstellung des Verstellobjektes wird somit durch das Maß der Verstellung des Hebels 301, d.h. die Auslenkung bzw. die Position des Hebels 301 bestimmt, wobei der Auslenkung bzw. Position eine bestimmte Impulsfrequenz zugeordnet ist.

Alternativ wird an Stelle eines Hebels bei prinzipiell gleicher Anordnung ein Kippschalter verwendet, wobei dem Grad der Verkippung eine bestimmte Impulsfrequenz der Steuersignale zugeordnet wird.

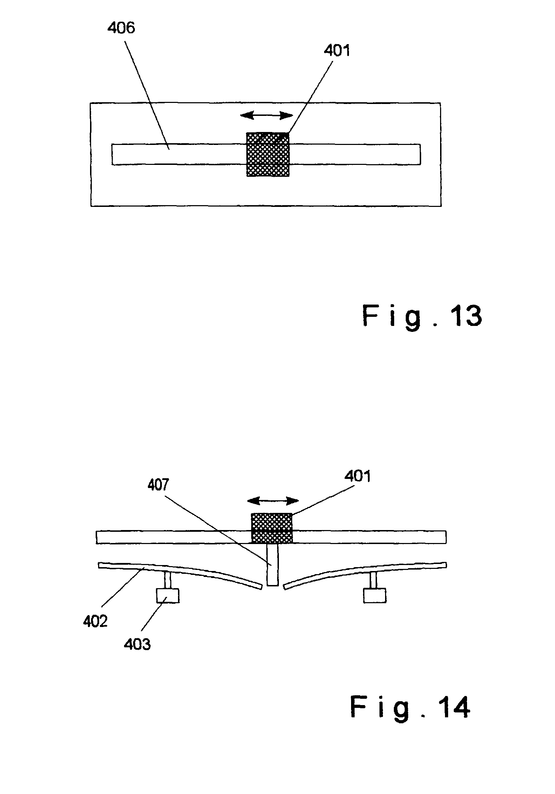

Ein ebenfalls nicht durch den Schutz umfang der Ansprüche erfaßtes Ausführung ist in Figur 14 dargestellt. Als Betätigungselement der etwa in der Armlehne eines Kraftfahrzeugs angeordneten Schaltvorrichtung dient ein in einer Kulisse 406 gelagertes Schiebeelement 401, das eine definierte Nullage aufweist und von dieser aus in zwei Richtungen in der Kulisse 406 bewegbar ist. Gemäß Figur 14 lenkt das Schiebeelement 401 bei seiner Verstellung mit einem Stift 407 ein elastisches Biegeelement 402 aus.

Die Auslenkung des Biegeelements 402 wird über ein Sensorelement 403 erfaßt und diesem Wert eine bestimmte Frequenz einer Impulsfolge zugeordnet, so daß entsprechend der Position des Schiebeelementes 301 ein Geschwindigkeitswert für die Verstellung eines zu verstellenden Objektes erzeugt wird. Die Impulsfolge wird als Steuersignal einer elektronischen Steuereinheit zugeführt. Je stärker die Auslenkung des Biegeelements ist, desto höher ist auch die Frequenz der Impulsfolge, so daß ein starkes Verschieben des Schiebeelementes mit einer hohen Verstellgeschwindigkeit des zu verstellenden Objektes korrespondiert.

Zur Erfassung der Auslenkung des Biegeelementes 402 sind auf dem Biegeelement 402 beispielsweise Dehnmeßstreifen angeordnet.

Alternativ ist als Sensorelement 403 ein Piezoelement, insbesondere eine piezokeramische Säule, vorgesehen. Bei einer Verstellung des Betätigungselementes 401 und einer damit einhergehenden Auslenkung des elastischen Biegeelements 402 wird auf die piezokeramische Säule 403 Druck ausgeübt, der zu einer Spannungserzeugung führt. Entsprechend der Höhe der Spannung wird eine Impulsfolge mit einer von der erzeugten Spannung abhängigen Frequenz erzeugt und an die elektronische Steuereinheit geleitet. Durch Verwendung jeweils einer piezokeramischen Säule 403 für jedes der beiden Biegeelemente 402 wird auch eine Richtungserkennung ermöglicht, da jeweils nur diejenige piezokeramische Säule 403 ein Signal erzeugt, die bei Auslenkung des Betätigungselementes 401 mit einem Druck beaufschlagt wird.

In einer weiteren Alternative wird der Auslenkung des Biegeelements 402 bei Verwendung von Dehnungsmeßstreifen ein bestimmter Widerstandswert und bei Verwendung eines Piezoelements ein bestimmter Spannungswert zugeordnet. Der Widerstandswert bzw. Spannungswert wird als Steuersignal einer elektronischen Steuereinheit zugeführt. Aus dem Widerstandswert bzw. Spannungswert bestimmt die Steuereinheit die Verstellgeschwindigkeit des zu verstellenden Objektes. Je stärker die Auslenkung des Biegeelements ist, desto größer ist auch der Widerstandswert bzw. der Spannungswert, so daß ein starkes Verschieben des Schiebeelementes mit einer hohen Verstellgeschwindigkeit des zu verstellenden Objektes korrespondiert.

In weiteren Alternativen findet bei den Ausführungen der Figuren 13 und 14 durch die elektronische Steuereinheit eine Zuordnung der Frequenzen des Steuersignals zu festen Verstellgeschwindigkeiten einer Verstellung des zu verstellenden Objektes entsprechend Figur 15 statt.

In alternativen Ausführungsformen (nicht dargestellt) eines ausgehend von einer Nullage in mindestens zwei Auslenkrichtungen verstellbaren Betätigungselements wird die Geschwindigkeit der Verstellung eines Verstellobjektes durch die Dynamik der Verstellung des Betätigungselements, insbesondere die Geschwindigkeit und/oder die Beschleunigung des Betätigungselementes bei der Verstellung bestimmt. Dabei sind Mittel vorgesehen, die die Geschwindigkeit und/oder die Beschleunigung des Betätigungselementes erfassen. Der erfaßte Geschwindigkeitswert bzw. Beschleunigungswert stellt ein Maß für die Verstellgeschwindigkeit des zugehörigen Verstellantriebs dar. Die Verstellgeschwindigkeit des Verstellantriebs und damit die Verstellgeschwindigkeit eines zu verstellenden Objekts wird also in Abhängigkeit von der Geschwindigkeit und/oder Beschleunigung des Betätigungselementes bei dessen Verstellung eingestellt.

## Patentansprüche

1. Schaltvorrichtung (10) zum Steuern eines fremdkraftbetätigten Verstellantriebs (5) eines Kraftfahrzeugs, insbesondere eines Fensterhebers oder eines Schiebedaches, mit einem manuell betätigbaren, drehbaren Betätigungselement (1), dem Mittel zur Signalerzeugung zugeordnet sind, und mit einer Steuereinrichtung (4, 104) die bei einer Drehung des Betätigungselements (1) von den Mitteln zur Signalerzeugung Steuersignale erhält und in Abhängigkeit von diesen Steuersignalen Steuerbefehle für den Antriebsmotor des Verstellantriebs (5) erzeugt, wobei bei einer Drehung des Betätigungselements (1) eine Steuersignal-Impulsfolge erzeugt wird, und wobei das drehbare Betätigungselement (1) vorzugsweise ein unbegrenzt drehbares Element, insbesondere ein unbegrenzt drehbares Rad ist,
**dadurch gekennzeichnet**,
daß die Steuereinheit (4, 104) in dynamischer Abhängigkeit von der Frequenz der Steuersignal-Impulsfolge die Verstellgeschwindigkeit des Verstellantriebs bestimmt.

2. Schaltvorrichtung nach Anspruch 1, **dadurch gekennzeichnet**, daß am Betätigungselement (1, 101, 201, 501) bzw. an einem mechanisch mit dem Betätigungselement (1, 101, 201, 501) verbundenen Teil (2, 102, 202) signalerzeugende und/oder signalverändernde Elemente angeordnet sind, die mit korrespondierenden Sensorelementen (3, 103, 203) zur Erzeugung von Steuersignalen in Wechselwirkung stehen.

3. Schaltvorrichtung nach Anspruch 1 oder 2, **dadurch gekennzeichnet**, daß die Mittel zur Signalerzeugung (2, 3; 102, 103; 202, 203) bei einer Drehung des Betätigungselements (1, 101, 201, 501) eine Steuersignal-Impulsfolge erzeugen, deren Frequenz der Drehgeschwindigkeit des Betätigungselements (1, 101, 201, 501) proportional ist, wobei die elektronische Steuereinheit (4, 104) aufgrund der Eigenschaften der Steuersignal-Impulsfolge neben der Verstellgeschwindigkeit den Verstellweg und/oder die Position und/oder die Verstelldauer und/oder die Richtung der Verstellung eines zu verstellenden Objektes bestimmt.

4. Schaltvorrichtung nach einem der Ansprüche 1 bis 3, **dadurch gekennzeichnet**, daß die mit den Steuersignalen der Sensorelemente (3, 103, 203) beaufschlagte elektronische Steuereinheit (4, 104) zusätzlich mit Signalen einer Vorrichtung zur Positionserkennung des Verstellobjektes beaufschlagt wird.

5. Schaltvorrichtung nach einem der Ansprüche 1 bis 4, **dadurch gekennzeichnet**, daß das die signalerzeugenden bzw. signalverändernden Elemente aufweisende Teil als Rad oder als Scheibe (102, 202) ausgebildet ist, wobei das Rad bzw. die Scheibe (102, 202) drehfest mit dem Betätigungselement (201, 201) verbunden ist.

6. Schaltvorrichtung nach Anspruch 5, **dadurch gekennzeichnet**, daß als signalerzeugende bzw. signalverändernde Elemente magnetisierte Bereiche des Rades bzw. der Scheibe, Loch- oder Schlitzblenden oder Widerstandsdrahtschleifen vorgesehen sind, die zur Signalerzeugung mit mindestens einem zweikanaligen Hallsensor (103, 203), einer Lichtschranke (103a, 103a') bzw. mit elektrischen Schleifkontakten (103b) in Wechselwirkung stehen.

7. Schaltvorrichtung nach einem der vorhergehenden Ansprüche, **gekennzeichnet durch**
a) eine segmentierte Magnetscheibe (202), die drehfest mit dem Betätigungselement (201) verbunden ist,
b) mindestens einen mit der Magnetscheibe (202) in Wechselwirkung stehenden zweikanaligen Hallsensor (203), der in Abhängigkeit von der Drehung der Magnetscheibe (202) Steuersignale für die elektrische Steuereinheit erzeugt,
c) eine zweite Scheibe (209), deren Drehachse auf einer Geraden (212) mit der Drehachse der Magnetscheibe (202) liegt
d) einen Dauermagneten (211), der fest mit der zweiten Scheibe (209) verbunden ist,
e) eine Kopplung zwischen dem Antriebsmotor des Verstellantriebs und der zweiten Scheibe (209) und
f) eine magnetische Kraftkopplung zwischen der Magnetscheibe (202) und dem Dauermagneten (211), derart, daß eine über das Betätigungselement (201) initiierte Ansteuerung des Antriebsmotors und eine damit verbundenen Drehung der zweiten Scheibe (209) über die magnetische Kraftkopplung zu einer Mitnahme und fortlaufenden Drehung der Magnetscheibe (202) und somit zu einer ebenfalls fortlaufenden Ansteuerung des Antriebsmotors unabhängig von einer weiteren manuellen Betätigung des Betätigungselementes (201) kommt.

8. Schaltvorrichtung nach Anspruch 7, **dadurch gekennzeichnet**, daß als zweite Scheibe das Schneckenrad (209) eines Schneckengetriebes des Verstellantriebs verwendet wird, wobei der Dauermagnet (211) fest mit dem Schneckenrad (209) verbunden ist.

9. Schaltvorrichtung nach einem der Ansprüche 1 bis 4, **dadurch gekennzeichnet**, daß das Betätigungselement als unbegrenzt drehbare Kugel (501) ausgebildet ist.

10. Schaltvorrichtung nach Anspruch 9, **dadurch gekennzeichnet**, daß die Kugel (501) ein gleichmäßiges magnetisches Muster aufweist.

11. Schaltvorrichtung nach Anspruch 9 oder 10, **dadurch gekennzeichnet**, daß die Kugel (501) nach Art eines Trackballs angeordnet ist, so daß sie manuell beliebig drehbar ist.

12. Schaltvorrichtung nach mindestens einem der Ansprüche 9 bis 11 für einen Spiegelantrieb eines Kraftfahrzeuges, **dadurch gekennzeichnet**, daß der Kugel (501) Sensoren (503a, 503b, 503c) zur Erfassung einer Verstellung der Kugel in y-Richtung und z-Richtung zugeordnet sind, deren Steuersignale eine Drehung des Spiegels um dessen y-Achse und z-Achse codieren.

13. Schaltvorrichtung nach einem der Ansprüche 9 bis 12 für einen kombinierten Spiegelantrieb und Fensterheberantrieb eines Kraftfahrzeuges, **dadurch gekennzeichnet**, daß das die Schaltvorrichtung (10) einen Umschalter (507) zur wahlweisen Anwahl des Spiegelantriebs oder des Fensterheberantriebs aufweist.

14. Schaltvorrichtung nach einem der vorangehenden Ansprüche, **dadurch gekennzeichnet**, daß das Betätigungselement (201) über eine flexible Welle (206') mit dem die signalerzeugenden bzw. signalverändernden Elemente aufweisenden Teil (202) verbunden ist.

15. Schaltvorrichtung nach einem der vorangehenden Ansprüche, **dadurch gekennzeichnet**, daß das Betätigungselement (1, 101, 201, 501) sowie die signalerzeugenden und/oder signalverändernden Elemente (102, 202) an der Türinnenverkleidung (107, 207, 8) einer Kraftfahrzeugtür gelagert sind, während die Signalauswerteinheiten, insbesondere die Sensorelemente (3, 103, 203) und die elektrische Steuereinheit (4, 104) auf einer Trägerplatte der Kraftfahrzeugtür angeordnet sind.

16. Schaltvorrichtung (10) zum Steuern eines fremdkraftbetätigten Verstellantriebs (5) eines Kraftfahrzeugs, insbesondere eines Fensterhebers oder eines Schiebedaches, mit einem manuell betätigbaren Betätigungselement (301, 401) mit definierter Nullage, dem Mittel zur Signalerzeugung zugeordnet sind, und mit einer Steuereinrichtung (304), die bei einer Betätigung des Betätigungse-lements (301, 401) von den Mitteln zur Signalerzeugung Steuersignale erhält und in Abhängigkeit von diesen Steuersignalen Steuerbefehle für den Antriebsmotor des Verstellantriebs (5) erzeugt, wobei das Betätigungselement ausgehend von der Nullage in mindestens zwei Auslenkrichtungen verstellbar ist,
**dadurch gekennzeichnet**,
daß bei einer Verstellung des Betätigungselements (301, 401) in Abhängigkeit von der Dynamik der Verstellung eine Steuersignal-Impulsfolge erzeugt wird und die Steuereinheit (304) in dynamischer Abhängigkeit von der Frequenz der Steuersignal-Impulsfolge die Verstellgeschwindigkeit des Verstellantriebs bestimmt.

17. Schaltvorrichtung nach Anspruch 16, **dadurch gekennzeichnet**, daß das Betätigungselement als gelenkig gelagerter Hebel (301) oder als Kippschalter mit definierter Nullage ausgebildet ist.

18. Schaltvorrichtung nach Anspruch 16, **dadurch gekennzeichnet**, daß das Betätigungselement als ein in einer Kulisse (406) gelagertes Schiebeelement (401) mit definierter Nullage ausgebildet ist.

19. Schaltvorrichtung nach einem der Ansprüche 16 bis 18, **dadurch gekennzeichnet**, daß das Betätigungselement (301, 401) in beiden Auslenkrichtungen etwa über ein Federelement jeweils mit einem Sensorelement (303, 403) gekoppelt ist, das in Abhängigkeit von jeweiligen Position des Betätigungselementes (301, 401) Steuersignale an die elektrische Steuereinheit abgibt.

20. Schaltvorrichtung nach einem der Ansprüche 16 bis 19, **dadurch gekennzeichnet**, daß das Betätigungselement (401) bei seiner Verstellung ein elastisches Biegeelement (402) auslenkt und die Auslenkung des elastischen Biegeelementes (402) über ein Sensorelement (403) erfaßt wird.

21. Schaltvorrichtung nach Anspruch 20, **dadurch gekennzeichnet**, daß auf dem elastischen Biegeelement Dehnmeßstreifen angeordnet sind.

22. Schaltvorrichtung nach Anspruch 20, **dadurch gekennzeichnet**, daß dem elastischen Biegeelement (402) ein Piezoelement, insbesondere eine piezokeramische Säule (403) zugeordnet ist, wobei das elastische Biegeelement (402) bei elastischer Auslenkung zur Signalerzeugung auf das Piezoelement (403) Druck ausübt.

23. Schaltvorrichtung nach einem der vorangehenden Ansprüche, **dadurch gekennzeichnet**, daß das Betätigungselement (1, 101, 201, 301, 401, 501) in die Türverkleidung oder in die Armlehne einer Kraftfahrzeugtür (6) integriert ist und nach Art eines Druckkugelschreibers in die Türverkleidung (8) bzw. die Armlehne versenkbar ist.

24. Schaltvorrichtung nach einem der vorangehenden Ansprüche für einen Fensterheberantrieb eines Kraftfahrzeuges, **dadurch gekennzeichnet**, daß die Schaltvorrichtung (10) Umschalttasten (VL, VR, HL, HR) für sämtliche Fensterscheiben des Kraftfahrzeuges aufweist, so daß die Fensterscheiben des Kraftfahrzeugs zentral von einer Schaltvorrichtung (10) aus nach Vorwahl verstellbar sind.

25. Schaltvorrichtung nach einem der vorangehenden Ansprüche, **dadurch gekennzeichnet**, daß die Schaltvorrichtung (10) einen Deaktivierungsschalter (506) aufweist.

26. Verfahren zum Steuern eines fremdkraftbetätigten Verstellantriebs (5) in einem Kraftfahrzeug, insbesondere eines Fensterhebers oder eines Schiebedaches, bei dem Steuersignale unter Verwendung eines manuell betätigbaren Betätigungselementes (1, 101, 201, 301, 401, 501) erzeugt und an eine elektronische Steuereinheit zur Erzeugung von Steuerbefehlen für den Antriebsmotor des Verstellantriebs (5) weitergeleitet werden,
**dadurch gekennzeichnet**,
daß bei einer Verstellung des Betätigungselementes (1, 101, 201, 301, 401, 501) in Abhängigkeit von der Dynamik der Verstellung eine Steuersignal-Impulsfolge erzeugt wird und in dynamischer Abhängigkeit von der Frequenz der Steuersignal-Impulsfolge die Verstellgeschwindigkeit des Verstellantriebs bestimmt wird.

27. Verfahren nach Anspruch 26, **dadurch gekennzeichnet**, daß die Steuersignale des weiteren ein Maß für den Verstellweg, die Position, die Verstelldauer und/oder die Richtung der Verstellung eines zu verstellenden Objektes darstellen.

28. Verfahren nach Anspruch 26 oder 27, **dadurch gekennzeichnet**, daß die Frequenz der Impulsfolge ein Maß für die Geschwindigkeit einer Verstellung des zu verstellenden Objektes darstellt.

29. Verfahren nach Anspruch 26 oder 27, **dadurch gekennzeichnet**, daß die Anzahl der Impulse innerhalb eines bestimmten Zeitintervalls ein Maß für den genauen Verstellweg einer Verstellung des zu verstellenden Objektes darstellt.

30. Verfahren nach einem der Ansprüche 26 bis 29, **dadurch gekennzeichnet**, daß die elektronische Steuereinheit (4, 104) bestimmten Frequenzen der Steuersignal-Impulsfolge bestimmte Verstellgeschwindigkeiten einer Verstellung des zu verstellenden Objektes derart zuordnet, daß
a) unter einem ersten Wert (f1) liegenden Impulsfrequenzen eine von der Impulsfrequenz bestimmte und entsprechend variable Geschwindigkeit zugeordnet wird, die mindestens gleich einer vorgegebenen Mindestverstellgeschwindigkeit (V1) ist,
b) zwischen dem ersten Wert (f1) und einem zweiten Wert (f2) liegenden Impulsfrequenzen eine konstante mittlere Verstellgeschwindigkeit (V2) und
c) über dem zweiten Wert (f2) liegenden Impulsfrequenzen eine maximale Verstellgeschwindigkeit (V3) zugeordnet wird.

31. Verfahren nach Anspruch 30, **dadurch gekennzeichnet**, daß sämtlichen Impulsfolgen mit unter dem ersten Wert (f1) liegenden Frequenzen eine konstante Mindestverstellgeschwindigkeit (Vl) zugeordnet wird.

32. Verfahren nach einem der Ansprüche 26 bis 31, **dadurch gekennzeichnet**, daß eine magnetische Kraftkopplung zwischen einem mit dem Betätigungselement (201) verbundenen signalerzeugenden oder signalverändernden ersten Element (202) und einem mit dem Antriebsmotor des Verstellantriebs gekoppelten, einen Dauermagneten (211) aufweisenden zweiten Element (209) erfolgt und daß durch die magnetische Kraftkopplung eine über das Betätigungselement (201) bzw. das erste Element (202) initiierte Ansteuerung des Antriebsmotors und eine damit einhergehende Bewegung des zweiten Elementes (209) zu einer Mitnahme des ersten Elementes (202) und damit zu einer weiteren Ansteuerung des Antriebsmotors führt.

## Claims

1. Switching device (10) for controlling an external force actuated driving device (5) in a motor vehicle, more particularly a window lifter or a sliding roof, with a manually operable rotatable operating element (1) associated with means for producing signals, and with a control device (4, 104) which during rotation of the operating element (1) receives control signals from the means for producing signals and produces in dependence on these control signals control commands for the drive motor of the driving device (5) wherein during rotation of the operating element (1) a control signal impulse sequence is produced and wherein the rotatable element (1) is preferably an unrestrictedly rotatable element, preferably an unrestrictedly rotatable wheel, characterised in that the control unit (4, 104) determines the displacement speed of the driving device in dynamic dependence on the frequency of the control signal impulse sequence.

2. Switching device according to claim 1 characterised in that signal-producing and/or signal changing elements are mounted on the operating element (1, 101, 201, 501) or on a part (2, 102, 202) mechanically connected to the operating element (1, 101, 201, 501) and are in alternating action with corresponding sensor elements (3, 103, 203) in order to produce control signals.

3. Switching device according to claims 1 or 2 characterised in that the means for producing a signal (2,3;102,103;,202,203) during rotation of the operating element (1, 101, 201, 501) produce a control signal impulse sequence whose frequency is proportional with the rotational speed of the operating element (1, 101, 201, 501) wherein the electronic control unit (4, 104) determines as a result of the properties of the control signal impulse sequence in addition to the displacement speed the displacement path and/or the position and/or the duration of displacement and/or the direction of displacement of an object to be moved.

4. Switching device according to one of claims 1 to 3 characterised in that the electronic control unit (4, 104) biased with the control signals of the sensor elements (3, 103, 203) is biased additionally with signals of a device for detecting the position of the displacement object.

5. Switching device according to one of claims 1 to 4 characterised in that the part having the signal-producing or signal-changing elements is formed as a wheel or as a disc (102, 202) wherein the wheel or disc (102, 202) is connected rotationally secured to the operating element (201, 201).

6. Switching device according to claim 5 characterised in that as signal-producing or signal-changing elements are provided magnetised areas of the wheel or disc, perforated or slit diaphragms or resistance wire loops which for producing signals are in alternating action with a twin-channelled echo sensor (103, 203), a light beam (103a, 103a') or with electric sliding contacts (103b).

7. Switching device according to one of the preceding claims characterised by
a) a segmented magnetic disc (202) which is connected rotationally secured to the operating element (201),
b) at least one twin-channelled echo sensor (203) which is in alternating action with the magnetic disc (202) and produces control signals for the electrical control unit in dependence on the rotation of the magnetic disc (202),
c) a second disc (209) whose axis of rotation lies on a straight line (212) with the axis of rotation of the magnetic disc (202),
d) a permanent magnet (211) which is fixedly connected to the second disc (209),
e) a coupling between the drive motor of the driving device and the second disc (209) and
f) a magnetic force coupling between the magnetic disc (202) and the permanent magnet (211) so that a control of the drive motor initiated by the operation element (201) and a rotation connected therewith of the second disc (209) leads through the magnetic force coupling to the entrainment and continuous rotation of the magnetic disc (202) and thus to a likewise continuous control of the drive motor independently of further manual operation of the operating element (201).

8. Switching device according to claim 7 characterised in that the worm wheel (209) of a worm gearing of the driving device is used as the second disc wherein the permanent magnet (211) is fixedly connected to the worm wheel (209).

9. Switching device according to one of claims 1 to 4 characterised in that the operating element is formed as an unrestrictedly rotating ball (501).

10. Switching device according to claim 9 characterised in that the ball (501) has a uniform magnetic pattern.

11. Switching device according to claim 9 or 10 characterised in that the ball is arranged in the manner of a tracking ball so that it can be rotated manually anywhere.

12. Switching device according to at least one of claims 9 to 11 for a mirror drive of a motor vehicle, characterised in that the ball (501) is associated with sensors (503a, 503b, 503c) for detecting a displacement of the ball in the y- and z- directions and whose control signals code a rotation of the mirror about its y-axis and z-axis.

13. Switching device according to one of claims 9 to 12 for a combined mirror drive and window lifter drive of a motor vehicle, characterised in that the switching device (10) has a change-over switch (507) for selectively switching on the mirror drive or the window lifter drive.

14. Switching device according to one of the preceding claims characterised in that the operating element (201) is connected by a flexible shaft (206') to the part (202) having the signal-producing or signal-changing elements.

15. Switching device according to one of the preceding claims characterised in that the operating element (1, 101, 201, 501) as well as the signal-producing and/or signal changing elements (102, 202) are mounted on the inner door trim (107, 207, 8) of a motor vehicle door, whilst the signal evaluating units, more particularly the sensor elements (3, 103, 203) and the electric control unit (4, 104) are mounted on a support plate of the motor vehicle door.

16. Switching device (10) for controlling an external force actuated driving device (5) of a motor vehicle, more particularly a window lifter or a sliding roof, with a manually operable operating element (301, 401) with defined neutral position and associated with means for producing signals, and with a control device (304) which during operation of the operating element (301, 401) receives control signals from the signal producing means and in dependence on these control signals produce control commands for the drive motor of the driving device (5), wherein the operating element can be displaced in at least two diverting directions starting from the neutral position, characterised in that during displacement of the operating element (301, 401) a control signal impulse sequence is produced in dependence on the dynamics of the displacement, and the control unit (304) determines in dynamic dependence on the frequency of the control signal impulse sequence the displacement speed of the driving device.

17. Switching device according to claim 16 characterised in that the operating element is formed as an articulated lever (301) or as a toggle switch with defined neutral position.

18. Switching device according to claim 16 characterised in that the operating element is formed as a sliding element (401) mounted in a slide guide (406) and having a defined neutral position.

19. Switching device according to one of claims 16 to 18 characterised in that the operating element (301, 401) is coupled in both deflection directions through spring elements to a sensor element (303, 403) which sends control signals to the electric control unit in dependence on the relevant position of the operating element (301, 401).

20. Switching device according to one of claims 16 to 19 characterised in that the operating element (401) when displaced deflects an elastic bending element (402) and the deflection of the elastic bending element (402) is detected through a sensor element (403).

21. Switching device according to claim 20 characterised in that extension measuring strips are mounted on the elastic bending element.

22. Switching device according to claim 20 characterised in that the elastic bending element (402) is associated with a piezo element, more particularly a piezo ceramic column (403) wherein the elastic bending element (402) during elastic deflection exerts pressure on the piezo element (403) to produce the signal.

23. Switching device according to one of the preceding claims characterised in that the operating element (1, 101, 201, 301, 401, 501) is integrated in the door trim or in the armrest of a motor vehicle door (6) and can be sunk into the door trim (8) or armrest in the manner of a ball pen.

24. Switching device according to one of the preceding claims for a window lifter drive of a motor vehicle characterised in that the switching device (10) has switch buttons (VL, VR, HL, HR) for all the window panes of the motor vehicle so that the window panes of the motor vehicle can be adjusted according to requirements centrally from one switching device (10).

25. Switching device according to one of the preceding claims characterised in that the switching device (10) has a deactivation switch (506).

26. Method for controlling an external force actuated driving device (5) in a motor vehicle, more particularly of a window lifter or a sliding roof, wherein control signals are produced by using a manually operable operating element (1, 101, 201, 301, 401, 501) and are sent to an electronics control unit for producing control commands for the drive motor of the driving device (5), characterised in that during displacement of the operating element (1, 101, 201, 301, 401, 501) a control signal impulse sequence is produced in dependence on the dynamics of the displacement and the displacement speed of the driving device is determined in dynamic dependence on the frequency of the control signal impulse sequence.

27. Method according to claim 26 characterised in that the control signals furthermore represent a measure for the displacement path, the position, duration of displacement and/or the direction of displacement of an object to be moved.

28. Method according to claim 26 or 27 characterised in that the frequency of the impulse sequence represents a measure for the speed of displacement of the object to be moved.

29. Method according to claim 26 or 27 characterised in that the number of impulses within a determined time interval represents a measure for the exact displacement path for displacing the object to be moved.

30. Method according to one of claims 26 to 29 characterised in that the electronic control unit (4, 104) allocates certain displacement speeds of a displacement of the object to be moved to certain frequencies of the control signal impulse sequence so that
a) a speed determined by the impulse frequency and which is correspondingly variable but at least equal to a predetermined minimum displacement speed (V1) is allocated to impulse frequencies lying below a first value (f1) ,
b) a constant mean displacement speed (V2) is allocated between the first value (f1) and a second value (f2), and
c) a maximum displacement speed (V3) is allocated above impulse frequencies lying above the second value (f2).

31. Method according to claim 30 characterised in that a constant minimum displacement speed (V1) is allocated to all the impulse sequences with frequencies lying below the first value (f1).

32. Method according to one of claims 26 to 31 characterised in that a magnetic force coupling takes place between a first signal-producing or signal-changing element (202) connected to the operating element (201), and a second element (209) having a permanent magnet (211) and coupling to the drive motor of the driving device, and that through the magnetic force coupling a control of the drive motor initiated by the operating element (201) or first element (202), and a subsequent movement of the second element (209) caused thereby leads to an entrainment of the first element (202) and thus to a further control of the drive motor.

## Revendications

1. Dispositif de commutation (10) pour la commande d'un élément d'entraînement (5) actionné par une force extérieure dans un véhicule automobile, en particulier un lève-vitre, ou bien un toit ouvrant, comprenant un élément d'actionnement (1) rotatif susceptible d'être actionné manuellement, auquel sont associés des moyens pour produire des signaux, et comprenant un dispositif de commande (4, 104) qui, en cas de rotation de l'élément d'actionnement (1) reçoit des signaux de commande depuis les moyens de production de signaux, et engendre en fonction de ces signaux de commande des ordres de commande pour le moteur d'entraînement de l'élément d'entraînement (5), dans lequel, lors d'une rotation de l'élément d'actionnement (1) il est produit une succession d'impulsions de signaux de commande, et dans lequel l'élément d'actionnement rotatif (1) est de préférence un élément en rotation non limitée, en particulier une roue en rotation non limitée,
caractérisé en ce que
l'unité de commande (4, 104) détermine la vitesse de réglage de l'élément d'entraînement en dépendance dynamique de la fréquence de la succession d'impulsions de signaux de commande.

2. Dispositif de commutation selon la revendication 1, caractérisé en ce que des éléments de production de signaux et/ou de modification de signaux sont agencés sur l'élément d'actionnement (1, 101, 201, 501), ou respectivement sur une partie (2, 102, 202) reliée mécaniquement à l'élément d'actionnement (1, 101, 201, 501), lesdits éléments coopérant avec des éléments de capteur correspondants (3, 103, 203) pour la production de signaux de commande.

3. Dispositif de commutation selon l'une ou l'autre des revendications 1 et 2, caractérisé en ce que les moyens de production de signaux (2, 3 ; 102, 103 ; 202, 203) produisent, lors d'une rotation de l'élément d'actionnement (1, 101, 201, 501) une succession d'impulsions de signaux de commande, dont la fréquence est proportionnelle à la vitesse de rotation de l'élément de d'actionnement (1, 101, 201, 501), de sorte que l'unité de commande électronique (4, 104) détermine, sur la base des propriétés de la succession d'impulsions de signaux de commande, outre la vitesse de réglage, la course de réglage et/ou la position et/ou la durée de réglage et/ou la direction du réglage d'un objet à régler.

4. Dispositif de commutation selon l'une des revendications 1 à 3, caractérisé en ce que l'unité de commande électronique (4, 104) alimentée avec les signaux de commande des éléments de capteur (3, 103, 203) est additionnellement alimentée avec des signaux d'un dispositif pour la reconnaissance de position de l'objet à régler.

5. Dispositif de commutation selon l'une des revendications 1 à 4, caractérisé en ce que la partie qui comporte les éléments de production ou de modification de signaux est réalisée sous la forme de roue ou de disque (102, 202), cette roue ou ce disque (102, 202) étant relié(e) solidairement en rotation à l'élément d'actionnement (101, 201).

6. Dispositif de commutation selon la revendication 5, caractérisé en ce qu'il est prévu, en tant qu'éléments de production ou de modification de signaux, des zones magnétisées de la roue ou du disque, des plaques à trous ou à fentes, ou encore des bagues de fil résistif, qui sont en coopération avec au moins un capteur de Hall à deux canaux (103, 203), avec une barrière lumineuse (103a, 103a'), ou encore avec des contacts électriques glissants (103b), pour la production des signaux.

7. Dispositif de commutation selon l'une des revendications précédentes, caractérisé par :
a) un disque magnétique segmenté (202), relié solidairement en rotation avec l'élément d'actionnement (201),
b) au moins un capteur de Hall à deux canaux (203) en coopération avec le disque magnétique (202), ledit capteur produisant des signaux de commande pour l'unité de commande électrique en fonction de la rotation du disque magnétique (202),
c) un deuxième disque (209) dont l'axe de rotation est situé sur une droite (212) avec l'axe de rotation du disque magnétique (202),
d) un aimant permanent (211), relié solidairement au deuxième disque (109),
e) un accouplement entre le moteur d'entraînement de l'élément d'entraînement et le deuxième disque (209), et
f) un accouplement à force magnétique entre le disque magnétique (202) et l'aimant permanent (211), de telle sorte qu'un pilotage du moteur d'entraînement amorcé via l'élément d'actionnement (201), et une rotation qui s'ensuit du deuxième disque (209) mène, par l'intermédiaire de l'accouplement à force magnétique, à un entraînement et une poursuite de la rotation du disque magnétique (202), et par conséquent également à une poursuite du pilotage du moteur d'entraînement, indépendamment d'une poursuite de l'actionnement manuel de l'élément d'actionnement (201).

8. Dispositif de commutation selon la revendication 7, caractérisé en ce que l'on utilise comme deuxième disque la couronne (209) d'une transmission à vis tangente de l'élément d'entraînement, l'aimant permanent (211) étant relié solidairement à ladite couronne (209).

9. Dispositif de commutation selon l'une des revendications 1 à 4, caractérisé en ce que l'élément d'actionnement est réalisé sous la forme d'une bille (501) à rotation non limitée.

10. Dispositif de commutation selon la revendication 9, caractérisé en ce que la bille (501) présente un motif magnétique régulier.

11. Dispositif de commutation selon l'une ou l'autre des revendications 9 et 10, caractérisé en ce que la bille (501) est agencée à la manière d'une "Trackball", de façon à pouvoir être mise en rotation quelconque manuellement.

12. Dispositif de commutation selon l'une au moins des revendications 9 à 11, pour l'entraînement d'un rétroviseur dans un véhicule automobile, caractérisé en ce que des capteurs (503a, 503b, 503c) sont associés à la bille (501) afin de détecter un déplacement de la bille dans la direction y et dans la direction z, dont les signaux de commande assurent le codage d'une rotation du rétroviseur autour de son axe y et de son axe z.

13. Dispositif de commutation selon l'une des revendications 9 à 12 pour un entraînement combiné de rétroviseur et de lève-vitre dans un véhicule automobile, caractérisé en ce que le dispositif de commutation comprend un élément d'inversion (507) pour la sélection au choix de l'entraînement de rétroviseur ou de l'entraînement de lève-vitre.

14. Dispositif selon l'une des revendications précédentes, caractérisé en ce que l'élément d'actionnement (201) est relié par l'intermédiaire d'un arbre flexible (206') à la partie (202) qui comporte les éléments de production ou de modification de signaux.

15. Dispositif de commutation selon l'une des revendications précédentes, caractérisé en ce que l'élément d'actionnement (1, 101, 201, 501) ainsi que les éléments de production et/ou de modification de signaux (102, 202) sont montés sur l'habillage intérieur de porte (107, 207, 8) dans un véhicule automobile, tandis que l'unité d'exploitation de signaux, en particulier les éléments de capteur (3, 103, 203) et l'unité de commande électrique (4, 104), sont agencés sur une plaque de support de la porte du véhicule.

16. Dispositif de commutation (10) pour la commande d'un élément d'entraînement (5) actionné par une force extérieure dans un véhicule automobile, en particulier un lève-vitre, ou bien un toit ouvrant, comprenant un élément d'actionnement (101, 301) susceptible d'être actionné manuellement qui présente une position de zéro définie, auquel sont associés des moyens pour produire des signaux, et comprenant un dispositif de commande (304) qui, en cas d'actionnement de l'élément d'actionnement (301, 401) reçoit des signaux de commande depuis les moyens de production de signaux, et engendre en fonction de ces signaux de commande des ordres de commande pour le moteur d'entraînement de l'élément d'entraînement (5), dans lequel, partant de la position de zéro, l'élément d'actionnement est susceptible d'être déplacé dans au moins deux directions de déviation,
caractérisé en ce que lors d'un déplacement de l'élément d'actionnement (320, 401) il est produit une succession d'impulsions de signaux de commande en fonction de la dynamique du déplacement, et l'unité de commande (304) détermine la vitesse de déplacement de l'élément d'entraînement en dépendance dynamique de la fréquence de la succession d'impulsions de signaux de commande.

17. Dispositif de commutation selon la revendication 16, caractérisé en ce que l'élément d'actionnement est réalisé sous la forme d'un levier (301) monté de façon articulée, ou bien sous la forme d'un élément de commutation basculant avec position de zéro définie.

18. Dispositif de commutation selon la revendication 16, caractérisé en ce que l'élément d'actionnement est réalisé sous la forme d'un élément coulissant (401) montés dans une glissière (406), avec une position de zéro définie.

19. Dispositif de commutation selon l'une des revendications 16 à 18, caractérisé en ce que l'élément d'actionnement (301, 401) est accouplé dans les deux directions de déviation à un élément de capteur respectif (303, 403), par exemple par l'intermédiaire d'un élément à ressort, ledit élément de capteur fournissant à l'unité de commande électrique des signaux de commande en fonction de la position respective de l'élément d'actionnement (301, 401).

20. Dispositif de commutation selon l'une des revendications 16 à 19, caractérisé en ce que l'élément d'actionnement (401) dévie lors de son déplacement un élément flexible élastique (402), et en ce que la déviation de l'élément de section flexible élastique (402) est détectée par l'intermédiaire d'un élément capteur (403).

21. Dispositif de commutation selon la revendication 20, caractérisé en ce que sur l'élément flexible élastique sont agencées des jauges de contraintes.

22. Dispositif de commutation selon la revendication 20, caractérisé en ce qu'un élément piézoélectrique, en particulier une colonne piézocéramique (403), est associé à l'élément flexible élastique (402), ledit élément flexible élastique (402) exerçant une pression sur l'élément piézoélectrique (403) lors d'une déviation élastique pour la production de signaux.

23. Dispositif de commutation selon l'une des revendications précédentes, caractérisé en ce que l'élément actionnement (1, 101, 201, 301, 401, 501) est intégré dans le revêtement de porte, ou bien dans l'accoudoir d'une porte de véhicule (6), et susceptible d'être effacé dans l'habillage de porte (8), ou dans l'accoudoir, à la manière d'un stylo à bille.

24. Dispositif de commutation selon l'une des revendications précédentes, pour l'entraînement de lève-vitre dans un véhicule automobile, caractérisé en ce que le dispositif de commutation (10) comprend des touches de commutation (VL, VR, HL, HR) pour la totalité des vitres du véhicule, de sorte que les vitres du véhicule sont susceptibles d'être manoeuvrées de manière centrale depuis un dispositif de commutation (10), après présélection.

25. Dispositif de commutation selon l'une des revendications précédentes, caractérisé en ce que le dispositif de commutation (10) comprend un commutateur d'inhibition (506).

26. Procédé pour commander un élément d'entraînement (5) actionné par une force extérieure dans un véhicule automobile, en particulier un lève-vitre, ou bien un toit ouvrant, dans lequel des signaux de commande sont produits en utilisant un élément d'actionnement (1, 101, 201, 301, 401, 501) susceptible d'être actionné à la main, et sont transmis à une unité de commande électronique pour la production d'ordres de commande pour le moteur d'entraînement de l'élément d'entraînement (5),
caractérisé en ce que lors d'un déplacement de l'élément d'actionnement (1, 101, 201, 301, 401, 501) on produit une succession d'impulsions de signaux de commande en fonction de la dynamique du déplacement, et la vitesse déplacement de l'élément d'actionnement est déterminée en dépendance dynamique de la fréquence de la succession d'impulsions de signaux de commande.

27. Procédé selon la revendication 26, caractérisé en ce que les signaux de commande représentent en outre une mesure pour la course de déplacement, la position, la durée de déplacement et/ou la direction du déplacement d'un objet à déplacer.

28. Procédé selon l'une ou l'autre des revendications 26 et 27, caractérisé en ce que la fréquence de la succession d'impulsions représente une mesure pour la vitesse d'un déplacement de l'objet à déplacer.

29. Procédé selon l'une ou l'autre des revendications 26 et 27, caractérisé en ce que le nombre des impulsions à l'intérieur d'un intervalle temporel déterminé représente une mesure pour la course de déplacement exacte d'un déplacement de l'objet à déplacer.

30. Procédé selon l'une des revendications 26 à 29, caractérisé en ce que l'unité de commande électronique (4, 104) associe certaines fréquence de la succession d'impulsions de signaux de commande à certaines vitesses de déplacement de l'objet à déplacer, de telle manière que :
a) à des fréquences d'impulsions situées au-dessous d'une première valeur (f1) est associée une vitesse déterminée par la fréquence des d'impulsions et variable de façon correspondante, ladite vitesse étant au moins égale à une vitesse de déplacement minimum prédéterminée (V1),
b) à des fréquences d'impulsions situées entre la première valeur (f1) et une deuxième valeur (f2) on associe une vitesse de déplacement moyenne constante (V), et
c) à des fréquences d'impulsions situées au-dessus de la deuxième valeur (f2) on associe une vitesse de déplacement maximum (V3).

31. Procédé selon la revendication 30, caractérisé en ce qu'à la totalité des successions d'impulsions avec des fréquences situées au-dessous de la première valeur (f1) on associe une vitesse de déplacement minimum constante (V1).

32. Procédé selon l'une des revendications 26 à 31, caractérisé en ce que l'on procède à un accouplement à force magnétique entre un premier élément (202) de production ou de modification de signaux relié à l'élément d'actionnement (201), et un deuxième élément (209) accouplé au moteur d'entraînement de l'élément d'entraînement et comportant un aimant permanent (211), et en ce que par l'intermédiaire de l'accouplement à force magnétique, un pilotage du moteur d'entraînement initialisé au moyen de l'élément d'actionnement (201), ou bien du premier élément (202), et un déplacement qui s'ensuit du deuxième élément (209), mène à un entraînement du premier élément (202), et ainsi à une poursuite du pilotage du moteur d'entraînement.
